# EUROPEAN PATENT SPECIFICATION

(11) **EP 3 020 122 B1**
(45) Date of publication and mention of the grant of the patent: **18.11.2020**
(21) Application number: 14823201.0
(22) Date of filing: 02.07.2014
(51) Int. Cl.: H02K 7/02, H02K 7/09, H02K 11/20, H02K 11/215, G01M 13/04, H02K 16/00, H02K 7/08, H02K 5/24, H02K 15/02, B21K 1/32, C21D 8/00, C21D 9/00, G01M 1/14, G01L 1/24, G01L 5/00, H02K 7/00

(54) **METHOD FOR PRODUCING A KINETIC ENERGY STORAGE SYSTEM**
VERFAHREN ZUR HERSTELLUNG EINES SYSTEMS ZUR SPEICHERUNG KINETISCHER ENERGIE
PROCÉDÉ DE PRODUCTION D'UN SYSTÈME DE STOCKAGE D'ÉNERGIE CINÉTIQUE

(30) Priority: 08.07.2013 US 201361843683 P
(43) Date of publication of application: 18.05.2016
(73) Proprietor: Saint-Augustin Canada Electric Inc., Saint-Augustin de Desmaures, Québec G3A 1S5 (CA)
(72) Inventor: DHARAN, Cheruvari Karthik Hari, Berkeley, California 94705 (US)
(74) Representative: Grünecker Patent- und Rechtsanwälte PartG mbB
(86) International application number: PCT/US2014/045275
(87) International publication number: WO 2015/006136

(56) References cited:
- WO-A1-95/27326
- WO-A2-2012/127194
- GB-A- 2 463 534
- US-A- 2 380 770
- US-A- 3 350 033
- US-A- 4 186 245
- US-A- 4 190 626
- US-A- 4 652 780
- US-A- 5 731 645
- US-A- 5 731 645
- US-A- 5 864 303
- US-A- 6 029 538
- US-A1- 2005 253 051
- US-A1- 2007 277 644
- US-A1- 2010 171 366
- US-A1- 2010 283 340
- US-A1- 2011 232 415
- US-A1- 2012 060 644
- US-A9- 2006 243 839
- US-B1- 6 269 895
- US-B1- 6 388 347
- US-B1- 6 566 775
- US-B1- 6 642 682
- US-B1- 6 642 682
- US-B1- 6 707 187
- US-B1- 6 710 489
- US-B2- 7 946 181
- US-B2- 7 946 181

## Description

### BACKGROUND OF THE DISCLOSURE

The following description is provided to assist the understanding of the reader. None of the information provided is admitted to be prior art.

The present disclosure relates generally to the field of kinetic energy storage. More specifically, it relates to flywheel energy storage for stationary applications where cost, is of high importance, in some cases, of higher importance than weight. These applications include frequency-regulation, time-of-use, uninterruptible power supply (UPS), demand response, and smoothing of renewable energy generation sources, among other applications, as shown in US 7946181 B2, GB 2463534 A, WO 2012/127192 A, US 5731645 A, and US 6642682 B1.

Flywheels have been used as energy storage devices or for smoothing mechanical or electrical power for hundreds of years. Recently, there have been significant advancements in the field of flywheel energy storage because of the availability of high strength-to-weight (the specific strength) materials, like composites. The kinetic energy stored per unit mass of flywheel material can be shown to be directly proportional to the specific strength (strength divided by density) of the material. Because some composite materials have very high specific strength, composites make attractive candidates for flywheels having a high energy storage potential per unit mass. As an example, a high-strength carbon fiber composite (e.g., T700 at 70% volume fraction) has a fracture strength of 3430 mega-pascals (MPa), or 490,000 pounds per square inch (psi) and a density of 1845 kilograms per cubic meter (kg/m³), or 0.067 pounds per cubic inch (lb/in³). Compare that to a non-composite material, such as a high strength alloy steel, which has yield strength of 1400 MPa (200,000 psi) and density of 7870 kg/m³ (0.285 lb/in³). On a strength-to-weight basis, therefore, composites have more than ten times higher specific strength, and, therefore, are able to store more than ten times the energy per unit mass compared to steel. This potential has led inventors to pursue designing flywheels based on composite rotors.

However, composite materials have not been cost-effective in stationary applications (i.e., applications in which weight is not the primary concern) where the primary goal is maximum energy stored per unit *cost*, rather than maximum energy stored per unit weight.

### SUMMARY OF THE DISCLOSURE

An exemplary embodiment not according to the invention relates to a material used for a flywheel rotor and a method used to manufacture the rotor with integral shafts. Some preferable materials include alloy steels that are heat treatable to a high level of strength while maintaining sufficient ductility to enable plastic flow. Steel alloys have a high strength-to-cost ratio in addition to low processing and fabrication cost. The rotor may be forged in multiple stages into a monolithic shape that can then be machined to form integral shafts. Examples of suitable steel alloys include AISI 4340, 4330, 17PH, M300, and other high strength alloys.

Another exemplary embodiment not according to the invention relates to the shape of the rotor. When a steel rotor is heat-treated, the rotors that have a higher surface area will have a higher cooling rate. Since the cooling rate affects the material properties of the resulting steel, the shape of the rotor can impact the working characteristics of the rotor. In particular, a fast cooling rate is needed to produce the transformation into martensitic steel (a high-strength steel, desirable in flywheels). Therefore, a rotor shape that allows for faster cooling may also allow for rotor materials that have a higher proportion of martensitic steel. Specifically, a thin, disc-shaped rotor may be formable into a material with a higher proportion of martensitic steel than a cylinder-shaped rotor of the same volume prepared in the same way. In this situation, the disk may have a higher specific strength than the cylinder (because of the higher proportion of martensite) and, therefore, the disc-shaped flywheel will have a higher energy density. Since the two structures would cost the same to make, the disc-shaped rotor would be more cost-effective because of the higher energy density. A disk may also exhibit a more uniform hardness (proportional to strength) throughout the cross-section compared to a cylinder, because the cooling rate would be more uniform.

Another exemplary embodiment not according to the invention relates to the design of a rotor and to the use of conventional bearings with such a rotor. It can be shown that, for a given level of stored energy, a larger diameter of flywheel rotor results in a slower rotational speed. This slower speed allows a large-diameter rotor to be used with conventional, low-cost rolling contact bearings, which are highly reliable, economical, and easily maintained, rather than non-contact systems (e.g., magnetic levitation) that must be used in designs with high rotational speeds and are complex, expensive, require maintenance, and compromise reliability.

Another exemplary embodiment relates to a method for reducing the load on the bearings through the use of an off-loading electromagnet. An electromagnet is arranged such that it provides a vertical off-loading force that lifts the entire rotor against the upper bearings and partially off of the lower bearings, reducing the load on the lower bearings. Since bearing life is sharply reduced by increasing load, the off-loading feature of this embodiment results in a system with a very long bearing life compared to a non-lifted rotor system while employing low-cost bearings and a heavy rotor. As a specific embodiment, a 5-ton rotor may be lifted by a coil of approximately 0.75 meters (30 inches) in diameter, consisting of 3420 turns of 18 AWG size copper wire.

Another exemplary embodiment not according to the invention relates to the use of a load cell at the upper bearing to measure the load applied to it when the rotor is lifted by the electromagnet, and a method for using a control system that adjusts the electromagnet's field to ensure that the desired load is always applied to the bearings. In some embodiments, this load can be maintained at a very low value, resulting in long bearing life. For example, the load on the upper bearing during operation may only be 1.3 kN (300 lbs) and the capacity of the upper load cell may only be 2 kilo-newtons (kN) or 450 lbs for one implementation.

Another embodiment relates to the use of a control system to adjust the voltage applied to the electromagnet to ensure that the desired load is maintained. Load limits may be set at the controller to initiate appropriate actions should the electromagnet and/or the bearing malfunction. A feedback loop may then be employed from the load sensing and magnet voltage circuits to automatically maintain the correct load.

Another embodiment relates to a method in which a lower bearing is used as a touchdown bearing that is rated to support the full weight of the rotor for several hours in the event of failure of the off-loader.

In another embodiment, a load cell at the lower bearing measures the load applied to it. This is used to ensure that the desired load is applied at start-up and that changes in loading are detected in case the electromagnet fails during normal operation. This load cell is also connected to a control system such that appropriate actions can be initiated. In one implementation, a desired capacity of the lower load cell for a nominal rotor mass of 5 tons is 110 kN (25,000 lbs).

Another exemplary embodiment relates to the design of the off-loading magnet and its low power consumption. In this embodiment, a single coil of insulated copper wire provides a suitable lifting force while maintaining low power loss due to the provision for a sufficiently large cross-section for the magnetic flux. In a typical application, a coil 125 mm in width and 35 mm deep at an average diameter of 750 mm will provide an off-loading force of 50 kN at a power consumption of only 45 W.

Another embodiment relates to improving the reliability of the bearings and motor/generator through the use of seals to allow for operation of these components in air while the rotor spins in a vacuum. Since the high tip speeds of the rotor will result in air drag losses, the rotor is enclosed in a vacuum housing and operated in a vacuum. Rolling contact bearings, however, may not perform reliably for long periods in a vacuum due to outgassing of the lubricant and a tendency to form metal-to-metal welds in a vacuum due to the lack of oxide formation as wear progresses. Also, placing the motor/generator inside a vacuum makes it difficult to cool since heat must be conducted outside of the vacuum. In such configurations, expensive heat pipes and/or large conductive elements may need to be added to ensure adequate cooling. For liquid cooled motors, the piping carrying the coolant may need to penetrate the vacuum envelope through joints that are expensive and prone to leaking. In some embodiments, the upper and lower shafts of the rotor pass through the vacuum envelope via low-friction fluoropolymer lip seals. This design allows for the bearings and motor to be placed outside the vacuum envelope helping to make it easy and less expensive to cool, inspect, maintain, monitor, and replace, if necessary. At the low rotational speeds characteristic of a disk-shaped rotor, the power loss from the seals is small, for example, less than 50 W for 40 mm shaft seal rotating at 6000 rpm.

In another embodiment, the energy storage system is supported on seismic-rated supports to provide for lateral motion in an earthquake. Such seismic supports are used to support large buildings in earthquake-prone locations. This embodiment provides safe operation of the flywheel storage system if it should experience an earthquake.

Another exemplary embodiment not according to the invention relates to a method for increasing the energy density of the rotor by a pre-conditioning treatment that also serves as the proof test of the rotor before it is put into service. In the pre-conditioning process, the rotor is over-spun past the yield point of the material. Since the maximum tensile stress occurs at the center in a rotating disk of uniform thickness, yielding proceeds from the center toward the outside diameter. If, by this process, the yield zone grows to a desired radius (for example to about 1/√2 of the rotor radius, which corresponds to half the volume of the disk), and the disk is subsequently slowed to zero, creating beneficial compressive stresses at the center of the disk. On rotating the disk again, the resulting stresses are lower than before the over-spinning pre-conditioning process because of these compressive residual stresses. On reaching the rotational speed at which yielding previously occurred, the new stress levels will be less than the yield stress, helping to increase the margin of safety. This pre-conditioning process, therefore, allows one to operate the disk at a speed corresponding to the yield strength, thereby increasing the energy density, while maintaining a positive margin of safety. Since the energy density (the kinetic energy stored per unit mass) is proportional to the square of the rotational speed, the increase in speed will increase energy density stored in the rotor.

Another exemplary embodiment not according to the invention relates to a method in which the surface of the disk is coated with a brittle paint that indicates the stress state in the rotor. The brittle paint has a very low threshold strain for brittle fracture and serves as an indicator of the magnitude of the stresses in the rotor and its distribution. As the rotor increases in speed, the strain corresponding to the rotor's stress state is recorded in the coating through a pattern of fine cracks. The spacing between the cracks is a measure of the stress; cracks closer together signify a higher state of stress than cracks further apart. By loading a tensile sample of the same material with the same coating, the crack spacing can be calibrated with respect to the stress. This technique helps one to estimate not only the magnitude and direction of the stresses experienced by the rotor, but also the stress distribution. These estimated values can be compared with analytical results to verify the fidelity of a computational model used in analysis of the rotor. In addition, the stress distribution obtained in this manner corresponds to each specific rotor that is tested. Thus, accurate statistics can be obtained on the manufacturing variability between rotors, helping to provide a quantitative measure of the reproducibility and reliability of the manufacturing process that was used to form the disk.

In another exemplary embodiment not according to the invention, an arrangement is described in which a video camera and a strobe light placed inside the vacuum envelope allows for real-time observation of the stress state in the rotor. The frequency of the strobe light is synchronized with the rotational speed of the rotor, facilitating real-time observation of the progression of the cracks in the brittle paint and, therefore, the stress distribution in the rotor. This capability may be useful for determining the relative margins of safety during operation of the system, particularly during the pre-conditioning process when an accurate measurement of the progression of the plastic zone with speed is essential.

Another embodiment relates to a method in which strain gauges coupled with transmitters and receivers are used to monitor the stress state in the rotor. In this embodiment, strain gauges are bonded to the surface of the rotor at locations of interest parallel and tangential to the radius vector. The addition of a telemetry transmitter to each strain gauge allows one to read the strain in real time as the rotor rotates. A receiver inside the vacuum envelope and attached to the housing receives the strain gauge reading and transmits it via a cable connected to a computer for display and recording. This arrangement provides real time measurement of the strain distribution in the rotor while it is rotating, information that may be particularly important during the pre-conditioning process since the stress distribution and the extent of the plastic zone can be accurately tracked with rotor speed.

Another embodiment relates to a method for reducing the precession-induced moment on a spinning rotor arising from the earth's rotation, while maintaining a high resonant frequency in the rotor/shaft arrangement. Thrust bearings alone are not adequate to absorb this moment at high rotational speeds. In an exemplary embodiment, the precession-induced moment on a spinning rotor arising from the earth's rotation is resisted by two angular contact bearings at the ends of the rotor shafts. The angular contact bearings provide axial support during operation and radial (or lateral) loading capability to resist precession-induced loads.

Another embodiment relates to an integrated vacuum housing and support structure for a flywheel rotor. Such an integrated housing may help to minimize the number of parts and reduce cost. The housing may be designed to maintain a vacuum in the space occupied by the rotor. To minimize cost and number of components, the vacuum chamber also serves as: the structure that supports the rotor; the alignment fixture for the shaft and bearings; and a suspension system for the rotor. The top plate of the vacuum envelope may also serve as a suspension element. During operation, the rotor is lifted by the electromagnet, which is integrated structurally into the top plate of the vacuum chamber. The stiffness of the top plate is designed so that, when the rotor is suspended, the minimum resonant frequency of the systems is at a value that is well below the operating speed range of the rotor. This arrangement helps to prevent fundamental resonances from occurring during normal operation of the system.

Another exemplary embodiment not according to the invention provides a method for adjusting the stiffness of the top plate by adding or removing radial rib stiffeners thereby providing a means for promoting resonances at the desired rotational speeds.

Another exemplary embodiment not according to the invention is a low-cost way for an accurately aligned system with tailored stiffness using three components: an upper plate, a lower plate, and a cylindrical section. By manufacturing the upper and lower plates from cast iron and the cylindrical section from a standard pipe section, one obtains an economical yet strong design. Ribs or stiffeners can be added or removed by welding to, or machining from, a basic cast iron form.

Another exemplary embodiment not according to the invention is a method for the use of dowel pins to accurately determine the relative position of the upper and lower plates of the three-component system.

Another embodiment is a method for the use of recessed lips in the upper and lower plates that seat at the ends of the cylindrical section to locate the upper and lower plates accurately with respect to each other.

In another exemplary embodiment not according to the invention, integral O-ring seal grooves at the two ends of the cylindrical section provide a low-cost mechanism for ensuring a leak-proof removable joint in the vacuum system.

In another embodiment, the electromagnet structure is integrated into the upper plate of the three-component system, resulting in an integrated structure that is multi-functional, being operable as both a housing for the coil, and a cross-section for the magnetic flux that is large enough to preclude saturation.

In another exemplary embodiment not according to the invention, a bearing/seal pack at each of the two bearing locations provides a convenient means to remove and inspect bearings without disassembling the system.

In another embodiment, the upper bearing pack has a means for accurately locating the axial position of the rotor shaft with respect to the air gap between the electromagnet and the rotor.

In another embodiment, the lower bearing pack has a means for accurately locating the axial position of the rotor with respect to the air gap between it and the electromagnet. With this embodiment, relative displacements between the upper and lower bearings resulting from deflections in the top and bottom plates due to rotor weight and/or vacuum pressure are compensated for such that there is adequate axial clearance between the bottom shaft stop and the lower bearing during operation.

In another embodiment, compact low-profile wavy springs ensure preloading the bearings in each bearing pack. A minimum axial preload is necessary to prevent ball-to-race sliding (instead of rolling) at high speeds which causes the temperature to rise, which in turn, can result in lubricant break-down leading to bearing failure.

In another embodiment, an actuator, such as a motor-driven worm gear, at the base of the unit provides a means for adjusting the axial position of the rotor remotely and autonomously when used in conjunction with a displacement transducer and a control system.

Another embodiment provides a means for lifting the rotor after initial assembly so that it is at the desired air gap to be magnetically held by the electromagnet. The application of vacuum to the inside of the sealed housing results in downward displacement of the top plate, and upward displacement of the bottom plate, due to the external atmospheric pressure. When the rotor is stationary and is resting on the lower plate, the force due to the external atmospheric pressure is sufficient to lift the rotor by deflecting the bottom plate such that the rotor shaft contacts the bearing stop at the upper bearing pack. This feature provides a means for achieving the desired air gap between the rotor and the magnet so that an adequate force to lift the rotor can be achieved. For example, a housing of 1.85 m (73 inches) in diameter will result in a force of 271 kN (61,600 lbs) applied downward on the top plate and the same force applied upward to the bottom plate. For a 5-ton rotor, resting on the bottom plate, this force is sufficient to lift the rotor at a pressure differential of about 20% of sea-level atmospheric pressure. By adjusting the level of vacuum, the amount of lift displacement of the rotor can be controlled. This embodiment is a low-cost yet effective means for positioning the rotor to enable it to be magnetically held prior to rotation.

Another embodiment describes a method for supporting the rotor. A hollow cylindrical structure located on the axis and at the bottom of the lower bearing pack acts as a single adjustable foot that supports the weight of the rotor when the off-loader is not activated.

Another embodiment describes the arrangement of several adjustable feet located below the bottom plate and under the cylindrical pipe section of the housing.

Another embodiment describes a method for seismic isolation of the system by adding discrete isolators at each foot.

Another embodiment describes a method for seismic isolation through the use of a continuous flexible support such as a thick rubber sheet placed under the bottom plate that allows for sliding as well as shear.

Another embodiment describes the use of non-contacting displacement sensors, such as capacitive gauges, located on the inside of the vacuum chamber and spaced around the periphery of the rotor that measures the change in radius of the rotor with speed.

Another embodiment describes a means for determining and removing dynamic imbalances in the rotor. Accelerometers are mounted around the periphery of the bearing packs to measure the level of imbalance. The accelerometer signals are correlated with the motor rotary encoder for precisely determining the angular location of the net imbalance in the rotor. This information is used to remove a small amount of material at the periphery corresponding to the imbalance location to reduce or remove the imbalance.

Another embodiment describes the use of displacement gauges to measure the axial displacement of the rotor relative to the structure. Displacement gauges, such as extensometers, are mounted at the base of the unit within the bearing pack to record the dynamic (axial) motion of the suspended rotor over its entire operating and pre-conditioning speed ranges to determine the speeds at which the rotor experiences each resonant mode. This embodiment provides the axial component of the displacement alone, which is valuable since one is able to characterize the axial component of the dynamic response of the suspended rotor over various operational modes.

In another embodiment, temperature sensors are placed adjacent to or on the outer races of the upper and lower bearings to monitor temperature changes that may signal potential failure and/or wear.

In another embodiment, a torque noise sensor is placed beneath the upper and/or lower bearing. The signal from this sensor, when compared with the signal from the torque transducer at the motor-to-rotor coupling, is a measure of wear in the bearing and provides for early detection of a potential bearing failure.

In another embodiment, acoustic emission (AE) sensors are placed on the structure at several locations including at the bearing packs and inside the vacuum housing. The transducers are in close contact with the structural elements via gel or grease acoustic coupling media.

In another exemplary embodiment not according to the invention, individual or bundles of ultra-high modulus (UHM) carbon fiber are bonded (or otherwise attached) tangentially and radially to the rotor surface at various radial distances from the rotor axis. Since the failure strain of UHM carbon fiber is low (∼1000 x 10⁻⁶) relative to strains experienced by the rotor when spinning (∼5000 x 10⁻⁶), the individual fibers will begin to fail as the strain in the rotor increases with speed. Fiber failures have a characteristic AE signature, which can be detected by an AE sensor (for example, a 500 kHz sensor) bonded to the structure near the rotor bearing location. This embodiment provides a means to determine the strains in the rotor remotely while within the vacuum envelope. The method can be used in other applications where strain gauges or other methods cannot be used, for example, in hostile environments, such as high temperature and/or oxidative and corrosive atmospheres. Other fibers such as mineral, glass and polymer fibers may also be similarly employed for different levels of failure strain capacity.

Another exemplary embodiment not according to the invention describes a means for efficient energy absorption in the event of rotor burst failure. A buried thick-walled steel and concrete containment structure is constructed in close proximity, and preferably, in contact with the outside cylinder wall of the housing. This arrangement keeps fragments from rotor failure to be contained while still in rotational modes (minimizing translational modes) so that energy dissipation is facilitated by friction and particle-to-particle interaction.

In another exemplary embodiment not according to the invention, the containment structure is constructed with a tapered geometry such that the diameter of the containment structure increases gradually with increasing depth from the bottom of the unit. At rotor failure, the fragments will tend to displace axially downward and be collected below the unit rather than move upward and be ejected above the surface.

In another exemplary embodiment not according to the invention, an arrangement of graded aggregate is placed such that aggregate size decreases with radial distance from the concrete wall. This results in an energy absorbing structure with larger porosity adjacent to the concrete containment structure where, crushing and compaction of the aggregate provides energy absorption. At increasing radial distance the decreasing size of the aggregate approaches that of sand particles that are also arranged with decreasing particle size with increasing radial distance. In this zone, fragment motion is resisted by friction with the sand particles.

In another embodiment, bearing packs including each of an accurately aligned bearing/seal/load cell assembly are contained in housings that are provided with dowel pins or locating features that accurately locate the axis of each with respect to the housing axis and, therefore, with each other.

In another embodiment, control software provides for safe operation of the system over its various modes of operation: pre-conditioning, speed cycling, power cycling, demand response, time-of-use, and other strategies for maximizing the benefits of storage with respect to the grid and/or other generating sources such as renewables (solar, wind, tidal) and/or diesel or gas-powered generators.

In another embodiment, control logic is incorporated in the control software for safe and efficient operation under various potential failure scenarios including, but not limited to, failures of the motor/generator, bearings, off-loader, vacuum pump, cooling systems, seismic events, and temperature spikes.

In another embodiment, the rotor is connected to an electronic or mechanically controlled continuously variable transmission (CVT) or other geared transmission such that the varying speed of the rotor is output to an induction motor. Over-driving the induction motor in this fashion past the slip speed results in power output while under-driving it will result in the induction motor being driven by the external power source to store kinetic energy in the rotor by increasing its speed to its maximum rated value. This is a low-cost method for energy storage and delivery since it does not involve brushless DC motors and their associated control and driver software schemes.

In another embodiment, a radial temperature gradient is maintained along the rotor radius. When the center of the rotor is at a higher temperature than its periphery, a non-uniform thermal strain is created that results in a beneficial thermal stress (compressive at the center, tensile at the periphery), which improves the overall stress state and thereby increases the energy density in the rotor.

In another embodiment, the geometry of the rotor is a simple fixed or variable thickness disk without shafts. Shafts are machined separately from alloy steel that may be austenitic (and, therefore, non-magnetic) and bonded to the disk. Since the rotor is lifted directly by the magnetic off-loader, the stresses in the bond joints are low and primarily compressive, due to the axial compressive preload, and are easily accommodated by the bond strengths of conventional polymer structural adhesives.

In another embodiment, the rotor is a simple fixed or variable thickness disk without shafts. Shafts are machined separately from alloy steel that may be austenitic (and, therefore, non-magnetic) and welded to the disk. Following the welding operation, conventional heat treatment procedures remove stress concentrations introduced into the rotor at the weld locations. The magnetic off-loader lifts the rotor directly and not by its shafts, thus, the stresses in the welds are low.

In another embodiment, the rotor is made as a simple fixed or variable thickness disk without shafts. Shafts are machined separately from alloy steel that may be austenitic (and, therefore, non-magnetic). The shafts are friction-welded to the disk by spinning them up to a high speed and then axially pressing them onto the disk. Following the friction-welding operation, conventional heat treatment procedures remove any stress concentrations introduced into the rotor at the friction-welds. Since the rotor mass is lifted by the magnetic off-loader, the stresses in the welds are low.

In another exemplary embodiment not according to the invention, the rotor includes several laminated plates that are adhesively bonded together using conventional structural adhesives. The only stress in the joints between the laminations is gravity loading which occurs when the rotor is lifted. This stress is low and easily accommodated by the adhesive tensile strength. For example, for ten laminations each 25 mm in thickness (1 inch), the tensile stress in the first lamination joint (the most highly loaded bonded joint) is less than 0.021 MPa (3 psi). Structural adhesives have tensile strengths readily exceeding 7 MPa (1000 psi). Thin laminas can be individually heat-treated to higher strengths thereby increasing the rotor energy density. In addition, laminated rotors have a high degree of redundancy since flaw propagation in one lamina tends to be restricted by the adjacent laminas. In addition, failure of one lamina does not result in failure of the entire rotor. Also, since the laminas are thin, they are in a state of biaxial plane stress when the rotor is spinning, a more uniform stress state corresponding to a higher energy density, than the biaxial plane strain state that exists in a thick monolithic rotor.

In another exemplary embodiment not according to the invention, the materials used in each lamination may be different for a fail-safe failure mode. For example, the laminations adjacent to the shafts may be made from a ductile yet relatively lower strength steel since fracture of the shaft-to-rotor failure would be catastrophic. The inner laminations may be made from a higher strength steel whose failure would be detectable and would not be catastrophic.

Another embodiment describes the use of permanent magnets instead of electromagnets. This arrangement is a more reliable, less expensive, and less complex off-loading scheme, since the power supply, coil, leads and feed-through connections are not required.

In another embodiment, a remotely controlled actuator establishes an adjustable and controllable air-gap between the rotor and the permanent magnet off-loader.

In another embodiment, the air-gap between the rotor and the electromagnetic or permanent magnet off-loader is maintained through feedback from the load cell that measures the lifting magnet forces. This arrangement provides closed loop control of lift loads that may vary due to dynamics, wear, and temperature variations during operation.

In another embodiment, single or multiple coupled DC motor/generators powered by DC power from two inverters mounted on the downstream end of a bidirectional controller connected to the grid at 460V, 3 phase (or other distribution voltages) is a low-cost scheme for energy storage at grid-scale. The arrangement provides modularity in both energy storage and power. For example, a 150 kWh capacity flywheel coupled with a 30 kW motor/generator can deliver 30 kW continuously for 5 hours to take advantage of differential pricing for time-of-use storage. For demand response and higher power, short time, applications, a motor/generator of 150 kW rating can be readily substituted to deliver 150 kW for 1 hour. The addition of a second 150 kW motor/generator at the bottom shaft location doubles the power rating by supplying 300 kW power for 30 minutes.

Another exemplary embodiment not according to the invention relates to a method for high-speed manufacture of composite rotors. In this embodiment, a composite fiber-reinforced ring is manufactured using a high-speed rotating cylindrical mold into which is fed a fiber bundle from a rotating spool located inside the mold. The spin axis of the fiber-dispensing spool is parallel to the rotating mold axis. As the fiber bundle is unwound from the spool, it is held against the inside surface of the rotating mold by centrifugal force. Room temperature curing pre-catalyzed thermosetting resin is sprayed from a nozzle perpendicular to the vertical wall of the rotating mold onto the fiber bundle lying against the wall. The high g-force provides adequate pressure for the liquid resin to infiltrate the fiber bundle as curing of the resin proceeds. When the cure is complete, the mold is stopped and the ring ejected from the mold. This process is 10 to 50 times faster than filament winding, the conventional process for manufacturing composite rings. For example, fiber dispensing rates of 4,500 m/min are possible with this arrangement compared to filament winding rates of 60 - 90 m/min. Alternatively, a resin system that cures at elevated temperature may be used, together with a method for heating the mold surface either by internal electrical resistance heaters, gas fired heaters, or infrared lamps illuminating the mold from the inside. Alternatively, the rotating mold has a central shaft and shaft lip seals so that infiltration and curing is done in vacuum to minimize voids in the composite. Additional spools may be simultaneously deployed such that processing times can be further reduced and/or different fibers or wires (glass, carbon, Kevlar, polymers, metal wires, etc.) can be dispensed simultaneously or in sequence such that the final composite ring has a layered or mixed configuration of different fiber types, which may be advantageous for certain applications. Alternatively, different resin systems can be applied in sequence to vary properties radially. For example, a composite ring can be readily fabricated in this manner with carbon fibers at its outside diameter and glass fibers at its inside diameter. Due to the high g-loading in this embodiment, for example, 300 g's in a 2 m diameter mold rotating at 520 rpm, void-free composite rings can be produced at high rates.

In another exemplary embodiment not according to the invention, a metal wire coil is manufactured using a high-speed rotating cylindrical mold into which is fed a metal wire, such as copper wire, dispensed from a rotating spool located inside the mold whose spin axis is parallel to the rotating mold axis. As the fiber bundle is unwound from the spool, it is held against the inside surface of the rotating mold by centrifugal force. Room temperature curing pre-catalyzed potting resin is sprayed from a nozzle perpendicular to the vertical wall to pot the coil for use as an electromagnet coil, for electric motors, or other electrical devices.

Another exemplary embodiment not according to the invention describes a method for making a composite ring using a pre-impregnated fiber bundle, or tow-preg, that is dispensed into a high-speed rotating cylindrical mold a rotating spool located inside the mold whose spin axis is parallel to the rotating mold axis. As the fiber bundle is unwound from the spool, it is held against the inside surface of the rotating mold by centrifugal force. Infrared, hot air, or other types of heaters provide the heat for curing the matrix polymer in the tow-preg. As before, various fibers and/or metal wires can be dispensed in this manner, simultaneously or sequentially.

The operation of a lifting electromagnet is unstable in that, as the gap between it and the rotor decreases, the lifting force has to be decreased rapidly to keep the gap stable. In another exemplary embodiment not according to the invention the stability of the lifting magnet is significantly improved by incorporating two compact springs on either side of the rotor via the bearings. These springs may be, for example, disc washers or wavy springs that are placed between the stationary outer races of the bearings and a firm stop. As the electromagnet's energizing current is increased and the gap between it and the rotor decreases, the upper spring tends to increase the resistance to the lifting of the rotor while the lower spring force decreases. This arrangement allows for stable positioning of the rotor using a lifting magnet that would otherwise be impossible. Tailoring the spring constants of each spring allows for a range of stable operation of the lifting magnet for various applications.

In another embodiment, the lifting of the rotor is assisted by the use of vacuum which results in reducing the magnet gap making the current required to lift the magnet much lower. For large rotors (necessary for high storage capacity flywheels), the mass of the rotor will result in structural sag that increases the distance between it and the magnet. At this position, a large current is required for the magnet to lift the rotor to bridge the gap. The application of vacuum results in both the upper housing (supporting the magnet) and the lower housing (supporting the rotor) to get closer together due to structural deformation. In one experiment, a 1.8 meter (71 inches) diameter housing subjected to vacuum resulted in a decrease in the rotor-to-magnet spacing by more than 1 mm (0.040 inch).

In another embodiment, one or more displacement transducers, such as, for example, a linear variable differential transformer (LVDT) or a linear potentiometer or a capacitive gauge is mounted to the upper housing to directly measure the gap between the rotor and the magnet. A non-contacting capacitive gauge would be best for gap monitoring during operation. Two gauges at 90 degrees with respect to each other can be used to measure the gap at each location from which the tilt of the rotor may be ascertained. This information can be sent to the electromagnet controller for adjustment of the current for positioning of the rotor for ease in control and electromagnet power management.

In another embodiment, the upper bearing is mounted on a support that is attached to a motorized linear actuator such as, for example, a motor-operated worm gear. This embodiment provides a method for actively controlling the rotor gap during operation. Thermal expansion, changes in vacuum and external environmental conditions that affect bearing position (and, therefore, the rotor/magnet gap) can be compensated for to control bearing load and, therefore, its life and temperature.

In another exemplary embodiment not according to the invention, a conical structure is provided around the lower bearing support that will support the rotor shaft if the bearing should fail. The heat generated by friction and the resulting progressive melting of the conical structure causes a controlled slowing of the rotor rotation with the energy dissipated by the heat of fusion of the material constituting the conical structure. Materials such as low-carbon, alloy and stainless steels as well as aluminum and titanium alloys provide tailored levels of energy dissipation. In one experiment, bearing failure of a 5-ton rotor spinning at 5350 rpm resulted in melting of the conical structure in a progressive and controlled manner such that the rotor came to a stop with mild wear along its lower edge and without leaving the housing.

In another exemplary embodiment not according to the invention, the lower housing is supported by a ring of a specific diameter related to the rotor diameter. In addition, the profile of the housing is such that, on bearing failure, the lower edge of the spinning rotor contacts the housing surface that is shaped at an angle at the point of contact such that melting of the lower rotor edge proceeds to form a thin molten metal film on which the rotor slides until it comes to rest. In one experiment, a 5-ton rotor undergoing bearing failure at 5350 rpm came to a stop in a controlled manner without penetrating the housing. A suitable angle θ of the contacting housing surface of 30 - 50 degrees was found to be best for energy absorption without penetrating and/or deforming the housing wall. In an embodiment, a supporting ring of a diameter that is 70 - 95% of the rotor diameter was found best suited for supporting the rotor after bearing failure.

In another exemplary embodiment not according to the invention, a shaft coupling between the motor/generator and the rotor serves to isolate the rotor from the motor. Since the rotor tends to rotate at a slight angle with respect to the vertical due precession arising from the earth's rotation and also from tolerances inherent in the assembly of the system, a coupling that includes an external spline connecting two internal splines - one from the rotor and the other from the motor provides a means for axial displacement (from rotor lift) as well as angular displacement (from rotor tilt) while, at the same time, allowing torque to be transmitted. This arrangement makes the system much more tolerant and prevents the rotor from being inadvertently loaded by vibrations transmitted by the motor.

A high performance flywheel as described in this disclosure can reach tip speeds well exceeding Mach 1.5 (510 m/s, 1100 mph). At these speeds, the rotor must be held in a vacuum. However, should the vacuum fail due to seal or pump failure, the incoming air gets rapidly heated when contacting the spinning rotor raising the internal pressure which in turn can result in blowing off the housing with catastrophic results. In another embodiment, the two halves of the housings comprising the flywheel enclosure are held together via welded tabs and bolts. The tabs are of a dimension such that if the internal pressure rises, they would bend plastically and open the joint between the housings thereby releasing the pressure safely. In one experiment, vacuum seal failure at 6000 rpm of a flywheel spinning at a tip speed of 560 m/s (1,250 mph) resulted in safe release of over pressure without structural failure.

In another exemplary embodiment not according to the invention, a pressure relief valve incorporated into the vacuum housing envelope of the flywheel provides for reduction of the air pressure buildup following a vacuum seal failure. The pressure relief valve, in conjunction with a feed-through tube that penetrates the vacuum housing can be located anywhere on the enclosure (e.g., on the upper or lower housings, or the cylindrical section between the upper and lower housings). The pressure relieve valve provides a vacuum-tight seal when a vacuum pump evacuates the chamber. In this operating mode, the external atmosphere is prevented from entering the evacuated enclosure by the vacuum seal. However, should there be a sudden leak in the vacuum envelope, for example, due to the failure of a seal elsewhere in the enclosure, when the rotor is spinning at high speed, the incoming air may be rapidly heated due to aerodynamic drag exerted on the rotor, resulting in a rapid pressure increase. The pressure relief valve that also acts as a vacuum seal is designed to open to release the increased pressure inside the enclosure to preclude catastrophic failure of the housing. The pressure relief valve includes a valve body that is pressed against a valve seat by a spring. The external atmospheric pressure adds additional sealing force when the enclosure is evacuated. If the vacuum fails and pressure develops inside the enclosure, the valve opens when the internal pressure acting on the valve exceeds the spring force, thereby releasing the pressure safely. By adjusting the tension of the valve spring, the value of the minimum pressure that will open the valve is readily adjusted.

A major impediment to the use of monolithic flywheels is the difficulty in servicing the bearings, seals and sensors without removing the rotor. Since the rotors are often very heavy easily exceeding several tons, this makes servicing a flywheel on site very difficult. The only way to do this is to use a large crane to lift the flywheel onto a truck for transportation to a maintenance/repair facility. Since energy storage applications are often in inaccessible locations, for example, for storage in remote villages or at television/cell phone relay stations, this drawback restricts the use of flywheel energy storage. In an embodiment, the bearing, load sensor and vacuum seal assembly can be removed and replaced without having to lift the rotor. In this embodiment, a bearing cartridge includes two components, the outer component is bolted to the housing while an inner component that includes the bearing, load sensor and vacuum seal can be removed with the rotor remaining in place. This inner component or module is then replaced by the maintenance technician by a new inner component. For the lower bearing, since the rotor mass is loading the lower bearing when it is stationary, removal of the inner module requires the lifting of the rotor. This is done by activating the electromagnet to off-load the rotor. In one experiment, a current of 1.5 amps applied to the coil of the electromagnet will lift a 5-ton rotor by over 1 mm, which allows for easier removal and replacement of the bearing/sensor/seal module. The operation required less than 250 watts in an experiment.

In another embodiment, dynamic lip seals enable the rotor to be in a vacuum while the motor and bearings are in the atmosphere. This embodiment eliminates the need for operation of bearings in a vacuum where heat rejection and friction coefficients can be high and the use of dry lubrication may be difficult for highly loaded bearings as is normal in high capacity flywheels. This embodiment also makes it possible to readily substitute motor/generator units for specific applications.

In another exemplary embodiment not according to the invention, the inner component supporting the bearing assembly has its inner surface treated by shot peening or anodizing or electroplating such that a high coefficient of friction exists between the outer stationary bearing race and its supporting cylinder. This embodiment results in a friction-induced hysteresis between the bearing and its case when the rotor is lifted or lowered by the magnet. Such a hysteresis provides control stability so that the electromagnet current can be within a reasonably wide range for a given bearing (axial) position. In contrast, a low friction surface would require high-resolution control, which will need to be constantly adjusted when there are even small changes in operating conditions such as temperature and load.

In another exemplary embodiment not according to the invention, a cooling jacket surrounds the bearing with inlet(s) and outlet(s) connected to an external radiator, pump and cooling fan. The cooling jacket and the connecting components adjacent to the bearing can be made of a high thermal conducting material such as aluminum to provide for greater cooling efficiency and lower thermal gradients. Since bearing temperature increases with bearing load and rotational speed, and since temperature reduces bearing life, keeping the temperature low by efficient cooling is vital for long operational times for the flywheel.

In another embodiment, a controller is configured to adjust the electromagnet current continuously during operation in order to maintain a minimum load on the bearing without compromising its life. Thermocouples mounted at the bearings provide guidelines for the controller to adjust bearing loads such that an adequate preload is maintained at all times and that the lift force from the magnet is sufficient to keep the rotor lifted while in operation.

In another embodiment, a controller is configured to track a number of revolutions of the bearing as well as a load on the bearing at all times. Using a bearing load/life algorithm, the controller tracks how much life is used up for each specific flywheel and the duty cycle it experiences. The controller can then indicate desired replacement of the bearing when its expected life is reached. This embodiment enables the determination of the remaining life in a bearing since the duty cycle in every installation may be different. In addition, a database may be generated that can be used to improve the load/life algorithm over time.

In another exemplary embodiment not according to the invention, the state of the integrity of the rotor may be determined with the rotor is in operation through a built-in ultrasonic transducer that scans the surface of the rotor after a certain number of hours of operation. The transducer is mounted to the end of an arm that allows the transducer to scan the rotor for internal defects. During the scanning operation, the rotor speed is slowed to about 0.1-10 rpm. After the completion of one rotation of the rotor, the transducer is indexed radially such that its path is a spiral track with spacing sufficient to inspect the complete rotor volume. Since the maximum stress state is at or near the center of a spinning rotor, in practice the scan need only be done to a radius of about 20% of the rotor radius. The type of transducer required will depend upon the thickness of the rotor, and the incorporation of an angular waveguide will allow for inspection below the shaft region at and near the rotor mid-plane. A feed-though is required for cabling through the vacuum envelope and for supplying the coupling gel. This embodiment enables removal of the entire rotor from the device for conventional ultrasonic inspection, thereby providing improved efficiencies resulting for easier transportation, disassembly, and minimized loss of revenue. In addition, inspection can be carried out at intervals that are convenient to the operational profile of the entire energy storage system.

Due to the safety critical aspect of mechanical energy storage, it is important to determine the number of life cycles of which a flywheel is capable. This is difficult to do in large systems since the charge/discharge time for full charging levels is high. For example, a 60 kW motor/generator unit will require 4 hours to charge and discharge a 120 kWh flywheel. To subject such a unit to 10,000 cycles will take at least 4-1/2 years not including time for maintenance. An embodiment discussed herein allows for accelerated life testing using a rotor that is scaled in diameter but not in thickness. Since steel alloy properties depend upon heat treatment and the latter depends on the thickness, keeping the thickness the same and the diameter at least as large as twice the thickness ensures that material properties identical to the full scale rotor are maintained. In one calculation, reducing the diameter by a factor of 3 increases the rpm by the same factor (for the same stress state) and reduces the cycling rate to 5 cycles per hour or 10,000 cycles in less than 3 months. In this embodiment, the smaller rotor is suspended in a vacuum chamber and rotated using a 5:1 speed increaser and a 130 kW motor/generator. Two units of the same dimensions are used to charge and discharge each other in tandem thereby minimizing power consumption. Attachment to the grid provides the remaining power for the losses in the two systems. In this manner, realistic rotor life testing can be completed in a reasonable amount of time.

### BRIEF DESCRIPTION OF THE DRAWINGS

The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.
FIG. 1 is a process flow drawing showing a sequence of processing steps for the manufacture of a high energy density rotor at low cost in accordance with an illustrative embodiment.
FIG. 2 is a schematic drawing showing a kinetic energy storage device in the form of a spinning rotor supported by bearings inside a vacuum envelope and driven by an external motor/generator in accordance with an illustrative embodiment.
FIGS. 3A-D shows plots of the beneficial effect of pre-conditioning on the stress state in the rotor in accordance with an illustrative embodiment.
FIG. 4A is a schematic drawing showing the use of a brittle paint coating for determining the stress state in the rotor in accordance with an illustrative embodiment.
FIG 4B is an example of a pattern of cracks in the brittle paint coating, the cracks resulting from spin up of the rotor in accordance with an illustrative embodiment.
FIG. 5 is a schematic drawing showing an arrangement of a video camera coupled with a strobe light for obtaining images of the crack patterns in the brittle paint coating while the rotor is spinning in accordance with an illustrative embodiment.
FIG. 6 is a schematic drawing showing an arrangement of strain gauges connected to radio frequency transmission circuits and antennas for determining the strains in the rotor while it is spinning in accordance with an illustrative embodiment.
FIG. 7 is a schematic drawing showing how the top plate of the vacuum housing also serves as an elastic suspension element of the rotor in accordance with an illustrative embodiment.
FIG. 8 is a schematic drawing showing stiffening ribs in a top plate of a housing, which acts as a suspension element of the rotor, the added or removed ribs altering the stiffness of the top plate and, therefore, the resonant frequency of the rotor suspension system in accordance with an illustrative embodiment.
FIG. 9A is a schematic drawing showing how the top plate (and upper bearing) is accurately located with respect to the bottom plate (and lower bearing) through a machined recessed lip for precise alignment of the rotor axis in accordance with an illustrative embodiment.
FIG. 9B is a schematic drawing showing how the lower central support may be raised or lowered to maintain the desired air gap between the rotor and the lifting off-loading magnet by employing a motor-driven mechanism supported on thrust bearings in accordance with an illustrative embodiment.
FIG. 10 is a schematic drawing of the central support foot in accordance with an illustrative embodiment.
FIG. 11 is a schematic drawing showing a rubber or elastomer-based sheet for providing seismic isolation to the unit in accordance with an illustrative embodiment.
FIG. 12 is a schematic drawing showing displacement gauges for monitoring rotor diameter change while spinning in accordance with an illustrative embodiment.
FIG. 13 is a schematic drawing showing accelerometers to measure and monitor rotating imbalances in the rotor in accordance with an illustrative embodiment.
FIG. 14 is a schematic drawing showing an extensometer to measure axial shaft displacement and vibration during operation in accordance with an illustrative embodiment.
FIG. 15 is a schematic drawing showing acoustic emission sensors for monitoring bearing wear and progressive damage in the device during operation in accordance with an illustrative embodiment.
FIG. 16 is a schematic drawing showing a containment design for capturing fragments from a failed rotor in accordance with an illustrative embodiment.
FIG. 17 is a schematic drawing showing a graded aggregate and sand arrangement for stopping fragments released during a rotor failure in accordance with an illustrative embodiment.
FIG. 18 is a schematic drawing showing an arrangement including an induction motor as a motor/generator when coupled to the rotor through a continuously variable transmission (CVT) in accordance with an illustrative embodiment.
FIG. 19 is a schematic drawing showing the imposition of a thermal gradient in the rotor to improve the storage energy density through the introduction of beneficial thermal stresses in accordance with an illustrative embodiment.
FIG. 20 is a schematic drawing depicting attachment of a separately machined shaft to a rotor by adhesive bonding in accordance with an illustrative embodiment.
FIG. 21 is a schematic drawing depicting attachment of a separately machined shaft to a rotor by fusion or friction welding in accordance with an illustrative embodiment.
FIG. 22 is a schematic drawing showing a rotor made from several laminations in accordance with an illustrative embodiment.
FIG. 23 is a schematic drawing showing a method for the rapid manufacture of a composite ring using dry fiber bundles dispensed into a rotating mold together with pre-catalyzed resin in accordance with an illustrative embodiment.
FIG. 24 is a schematic drawing showing a method for the rapid manufacture of a composite ring using pre-impregnated fiber bundles (tow preg) dispensed into an internally heated rotating mold in accordance with an illustrative embodiment.
FIG. 25 is a schematic showing two upper and lower springs that enable stable operation of an electromagnet for lifting the rotor in accordance with an illustrative embodiment.
FIG. 26 is a schematic drawing showing a vacuum for assisting the lifting of the rotor to reduce the gap with respect to the lifting electromagnet in accordance with an illustrative embodiment.
FIG. 27 shows a displacement transducer for directly measuring the rotor-to-magnet gap in accordance with an illustrative embodiment.
FIG. 28 shows an arrangement in which a motorized upper bearing support is used to adjust the axial position of the rotor in the flywheel in accordance with an illustrative embodiment.
FIG. 29 shows the configuration of the lower bearing cartridge that is designed to support the rotor when bearing fails and absorb some of the rotor's rotational energy by melting while supporting the rotor in accordance with an illustrative embodiment.
FIG. 30 shows edge support of the rotor by the housing after bearing failure leading to progressive and safe rotational energy absorption in accordance with an illustrative embodiment.
FIG. 31 shows a gear coupling between the rotor and the motor to isolate the rotor from motor vibration and displacements in accordance with an illustrative embodiment.
FIG. 32 shows bolts inserted through plastically deforming tabs that hold the housings of the flywheel together while allowing deformation sufficient to release internal overpressure due to vacuum failure at high rotational speeds of the rotor in accordance with an illustrative embodiment.
FIG. 33 shows a pressure relief valve to release internal overpressure in the housing due to vacuum failure in accordance with an illustrative embodiment.
FIG. 34 shows an arrangement for supporting the rotor bearing in a manner that allows for replacement of the bearing and seals without removing the rotor in accordance with an illustrative embodiment.
FIG. 35 shows an arrangement for efficient cooling of the bearing during operation in accordance with an illustrative embodiment.
FIG. 36 shows an arrangement for an ultrasonic detector inside the housing of the flywheel for scanning the rotor for the presence of flaws in accordance with an illustrative embodiment.
FIG. 37 shows two flywheel units that charge and discharge with each other for efficient cycling to evaluate life cycles and reliability in accordance with an illustrative embodiment.

### DETAILED DESCRIPTION OF THE PREFERRED EMBODIMENTS

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. It will be readily understood that the aspects of the present disclosure, as generally described herein, and illustrated in the figures, can be arranged, substituted, combined, and designed in a wide variety of different configurations, all of which are explicitly contemplated and make part of this disclosure.

With reference to the accompanying FIGURES, the present disclosure relates to kinetic energy storage, specifically flywheel-based energy storage, for use in electrical grids, renewable energy generation systems such as wind turbines, solar panels, tidal machines, and industrial applications where smoothing of power demand reduces both capital and operational costs. The present disclosure also relates to methods of producing, controlling, and integrating such storage devices with existing grid and micro-grid energy distribution systems. While the subject matter herein is presented in the context of energy storage devices in the field of grid-scale applications, such devices may be utilized in alternate applications such as stand-alone energy storage for electric vehicle charging stations, rail transportation systems, elevators, cranes, shipboard systems, or any other devices utilizing kinetic energy storage, as will be appreciated by those of skill in the art who review this disclosure.

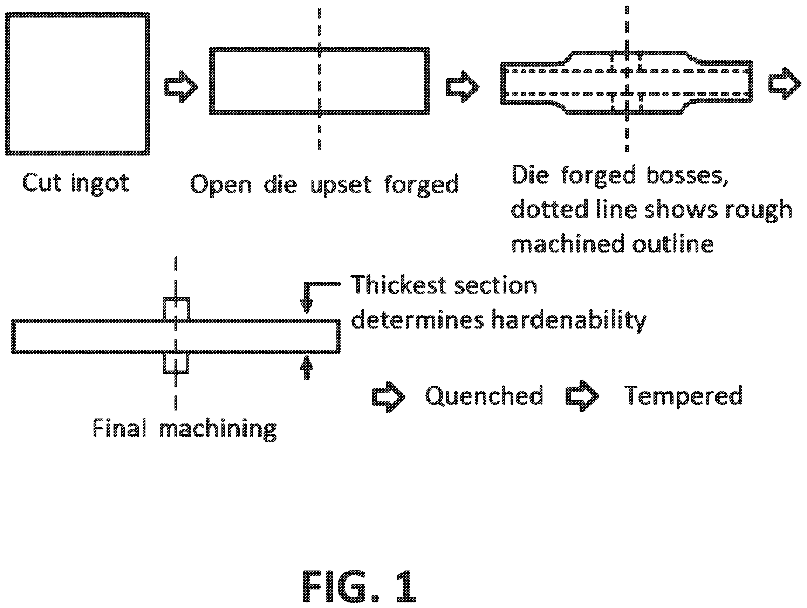

Referring to FIG. 1, an exemplary sequence of metal forming operations is shown for producing a rotor with the desired strength and uniformity at low cost. The rotor may be one of the most expensive components in the design of the energy storage device disclosed herein. It may be of constant or variable thickness. When rotating at high speed, the stresses in a constant thickness rotor are at a maximum at its center where the radial and tangential stresses are both tensile. Structural integrity at the center is, therefore, more important than material integrity at the edges, since flaws are more likely to initiate and propagate at the center of the rotor. The manufacturing sequence shown in FIG. 1 is a method for helping to reduce the size of the flaws in an economical and reproducible manner.

A cast ingot of the desired alloy, for example, American Iron and Steel Institute (AISI) designation 4340, is cut to the desired volume and subjected to one or more upsetting operations in an open die set-up in a hydraulic press at the hot forging temperature. This process compresses voids in the ingot and stretches inclusions into thin and finer particles called stringers. Since the loading is axisymmetric, the process may also result in dispersion of stringers. In an exemplary embodiment, the blank is further hot-forged into a shape containing bosses on either surface using a closed-die set of tools. In some embodiments, the heights of the bosses exceed the final heights of the integral shafts of the rotor. The bosses may be of different heights for specific applications. Following this operation, the rotor is now almost in its final shape. This shape may present a relatively thin cross-section for rapid and uniform cooling during the quench operation in the heat treatment process.

Transformation-hardening steel alloys such as AISI 4340 depend upon a minimum cooling rate for the formation of martensite which, after the tempering process determines the strength and ductility of the final product. The minimum cooling rate occurs in the thickest location of the cross-section farthest from the surface. Thus, the design of the rotor, for maximum energy storage density capacity at minimum cost, depends upon a low aspect ratio (thickness-to-diameter ratio). In one example, an aspect ratio of about 15% results in a thickness of 0.25 m (10 inches) for a maximum energy storage capacity of 150 kWh when AISI 4340 heat-treated alloy steel is used. In other embodiments, thicknesses of less than 0.25 m may be used (e.g., thickness in the range of 0.05 m - 0.25 m).

Following the closed-die operation to form the bosses, the blank is rough-machined to further reduce the maximum thickness in the blank. This process may be followed by quenching and tempering (heat-treating). An exemplary quenching is to heat the blank to 850 degrees Celsius, quench in a polymer-modified water bath, followed by tempering between approximately 210 degrees Celsius and 250 degrees Celsius. Following the quenching operation, the part is finish-machined and balanced. Such a process sequence may result in a minimum yield strength of about 1200 MPa (170,000 psi), ultimate tensile strength of about 1300 MPa (185,000 psi), and ductility of at least 6% for an exemplary rotor of the dimensions discussed above. It may be important to ensure adequate ductility so that the rotor, when subjected to the pre-conditioning process disclosed below, will have the desired beneficial residual stress state that improves energy density and ensures adequate margins of safety.

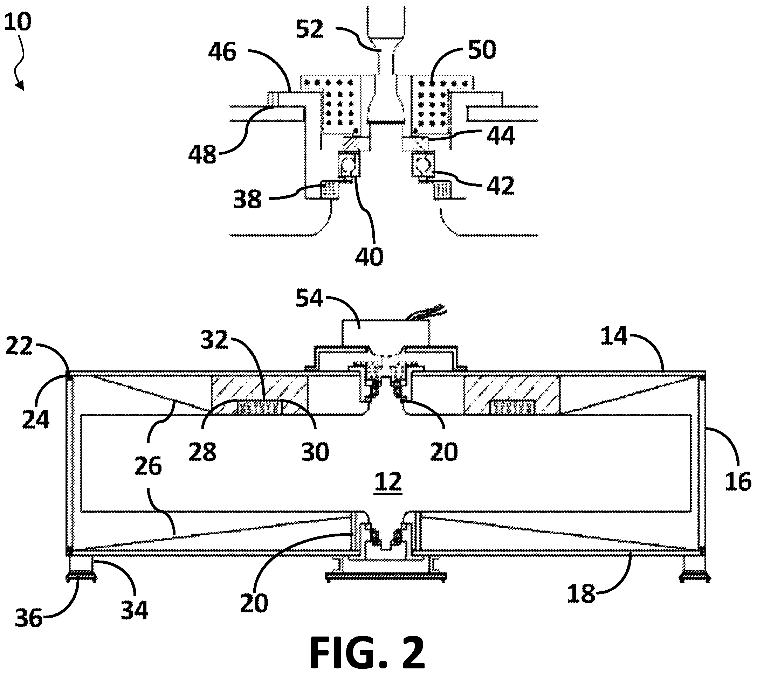

Referring to FIG. 2, a system 10 shows a flywheel energy storage device that includes a rotor 12 that is located within a hermetically sealed housing including a top plate 14, a cylindrical vertical enclosure 16, and a bottom plate 18. Two bearing packs 20 allow the rotor to rotate freely in rolling contact with the bearings held within each bearing pack. Dowel pins 22 accurately locate the upper and lower plates with respect to each other. O-ring seals 24 in the cylindrical enclosure 16 seal the top and bottom plates to form the vacuum enclosure. Ribs 26 in the top and bottom plates provide the desired level of stiffness to each plate. An electromagnet 28 in close proximity to the top surface of the rotor provides a vertical force large enough to lift the rotor. An annular slot 30 whose axis coincides with the axis of the rotor is cut into the body of the electromagnet. The annular slot is filled with a copper coil 32 including several coils of a single insulated wire which, when connected to a DC power supply will provide a controllable lifting force on the rotor.

A series of externally mounted feet 34 support the device on a pad 36 including a number of bonded and laminated steel/rubber layers that provide isolation to the device from seismic events. The bearing pack 20 contains a lip seal 38 that seals the rotating shaft against air infiltrating into the vacuum envelope. A wavy spring 40 ensures that a minimum axial preload exists on the rolling contact bearing 42 and a load cell 44 provides a means for tracking the axial load on the bearing during operation. The shaft of the rotor 12 has a series of steps machined into it to accommodate the seal, spring, bearing, and load cell. The bearing pack outer housing 46 is located accurately on the top plate via dowels 48. The axial position of the shaft is adjusted by an internally threaded hollow cylindrical insert 50 which, when rotated establishes the upper set point that locates the load cell's 44 (and, therefore, the shaft's) axial position. This feature provides a means for adjustment of the air gap between the top surface of the rotor 12 and the electromagnet 20. A coupling shaft 52 connects the top of the rotor shaft to the motor/generator 54.

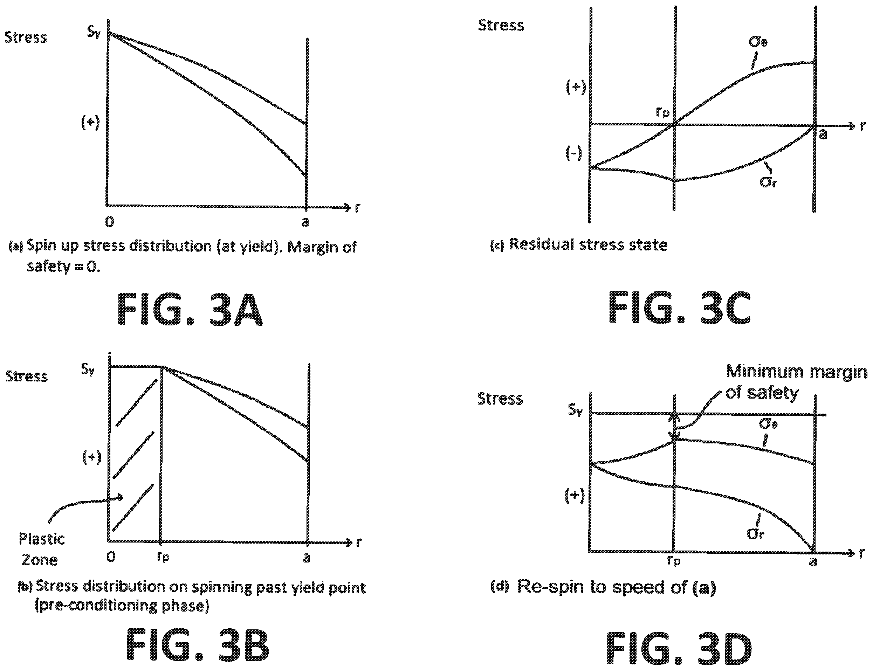

FIGs. 3A-D show plots of the stress distribution in the rotor when a pre-conditioning treatment as disclosed below is performed on the rotor. FIG. 3A shows the stress distribution (radial and tangential stresses) in a rotor spinning at a speed at which yielding just begins to occur at the center of the rotor. This point is considered to be the maximum level of loading for the rotor and its maximum operating speed is usually set to a value well below this value. However, increasing the rotor speed above the point corresponding to the initiation of yield creates a plastic zone that grows as shown in FIG. 3B to a radius *rₚ.* On reducing the rotor speed to zero, a residual stress state now exists as shown in FIG. 3C, which is characterized by a central compressive zone. On re-spinning the rotor to the speed reached in FIG. 3A, the residual compressive zone reduces the maximum stress so that a positive margin now exists at the speed corresponding to the yield speed. This pre-conditioning process thus increases the energy storage density in the rotor.

In some embodiments, the rotor strain may be estimated using computational models. In such an embodiment, the desired amount of strain may be converted to the rotation speed for a given rotor material and geometry. In this way, a sufficient amount of strain would simply be a given spin speed, without actually measuring the strain in each rotor. In other cases, as will be shown, the strain may be measured while spinning is carried out such that the strain may be determined and the spinning speed may be increased until the desired yielded zone is produced.

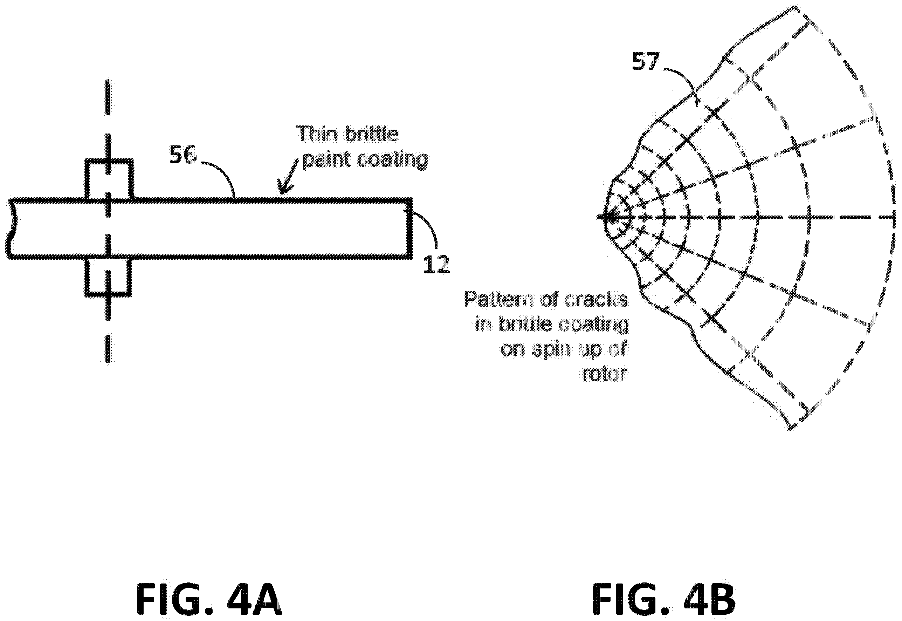

FIG 4A shows the application of a brittle paint 56 onto the rotor 12. On spinning up the rotor, the strain in the rotor produces a crack pattern 57, shown in FIG. 4B, in the brittle paint that represents the stress state in the rotor. The crack pattern includes tangential and radially distributed cracks whose spacing is a measure of the magnitude of the stress; the closer the spacing the larger the stress. Quantitative values of the stress distribution can be obtained through calibration from loading a tensile specimen to known loads and measuring the crack pattern. In addition to the magnitude of the stresses, the directions of the principal stresses are also displayed in the pattern since the orientations of the cracks are perpendicular to the principal stress directions.

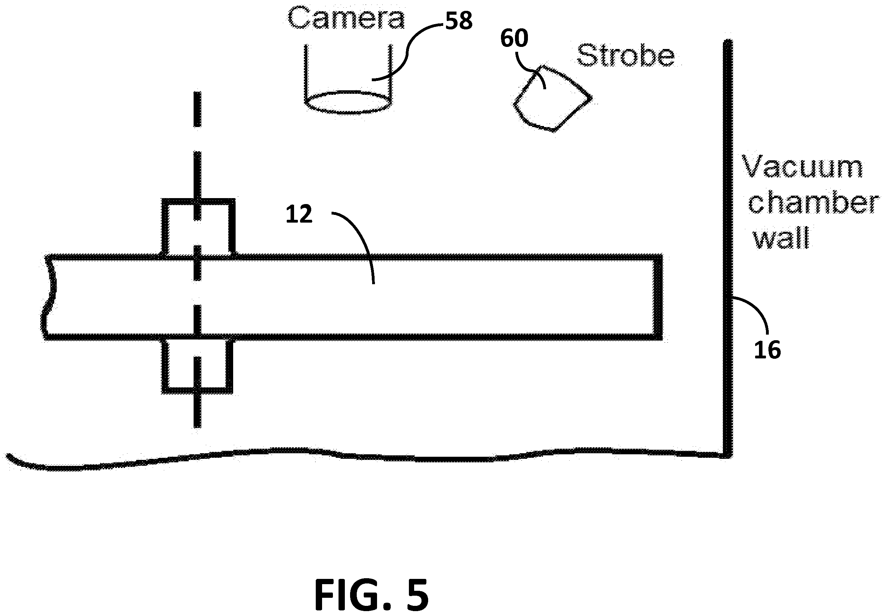

FIG. 5 illustrates the use of a video camera 58 and a strobe light 60 whose frequency is synchronized with the rotor speed. In this manner, the progression of the cracks in the brittle paint layer on the rotor 12 within the vacuum envelope 16 can be recorded as a function of rotor speed.

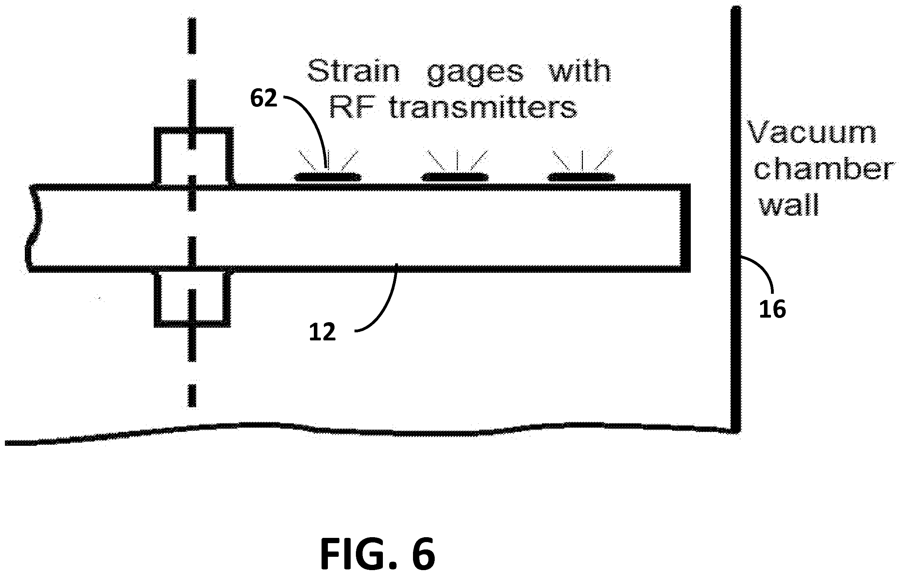

In FIG. 6, strain gauges with radio-frequency (RF) transmitters 62 are bonded to the surface of the rotor 12 inside the vacuum chamber wall 16 and oriented along directions of interest parallel and tangential to the radial vector. In alternative embodiments transmitters 62 may be any type of wireless transmitter or wireless communication system known in the art and is not limited to radio-frequency transmitters. A receiver inside the vacuum envelope communicates the strain gauge readings to a recorder via a cable for display and recording. This arrangement provides real time measurement of the strain distribution on the rotor while it is rotating; information that is particularly important during the pre-conditioning process, since the stress distribution and the extent of the plastic zone is accurately tracked with rotor speed. In addition, control software can use this information to warn of responses that are not nominal, and shut down the unit, if necessary.

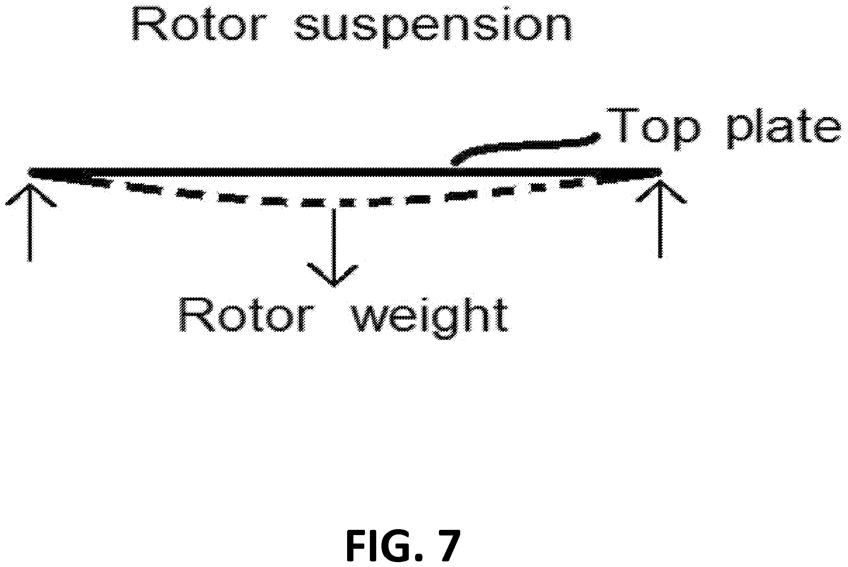

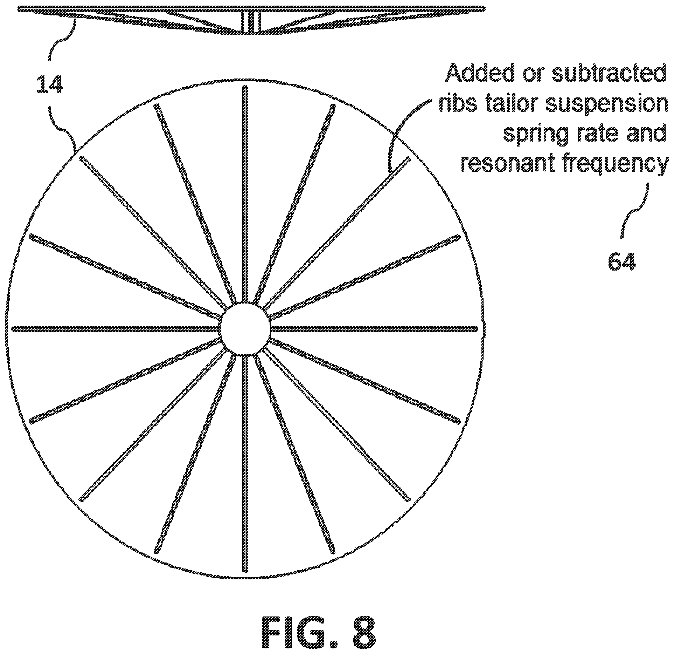

FIG. 7 illustrates the use of the elastic response of the top plate from which the rotor is suspended as a spring that determines the minimum resonant frequency of the system. The weight of the rotor deflects the top plate depending upon its stiffness. The resonant frequency is proportional to the square root of the ratio of the plate stiffness (the rotor weight divided by the deflection of the plate, shown as the dotted line in the figure) to the rotor weight. Thus, if the stiffness of the top plate can be adjusted, one can obtain a desired resonant frequency of the system. This feature is illustrated in FIG. 8, which shows how the stiffness of the top plate 14 can be adjusted by adding or removing rib stiffeners 64. The lateral loads depend, for a given rotor speed, on the lengths of the rotor shafts, with the load decreasing with increasing shaft length. The resonant frequency of the first-bending mode of the rotor/shaft structure, however, increases with decreasing shaft length. While the resonant frequency decreases with shaft length as *L*^{*3*/*2*}, it increases with shaft diameter as *d².* Thus, a suitable ratio of the shaft diameter to length provides a system that has both low lateral loading on the bearings from rotor precession as well as high resonant frequency.

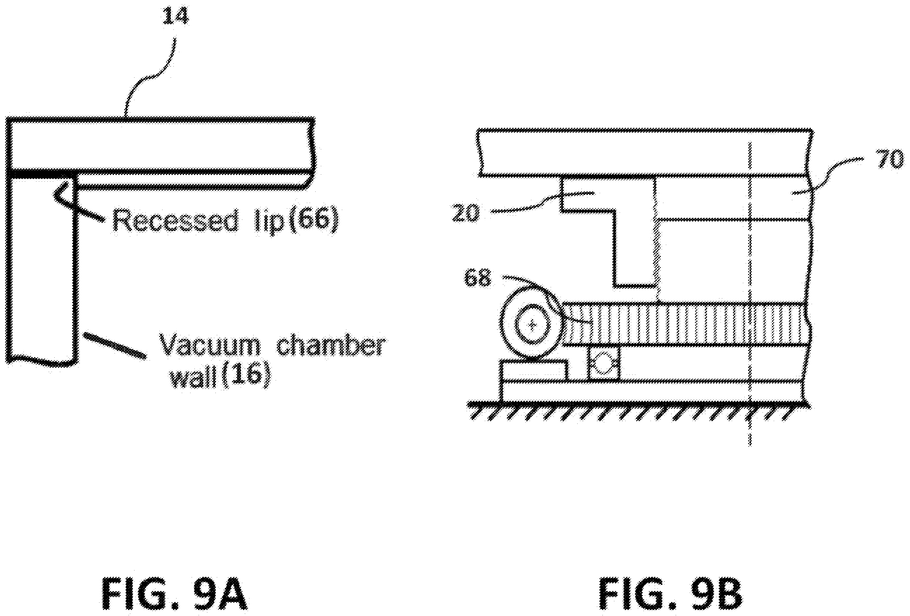

FIG. 9A is a schematic drawing showing how the top plate (and upper bearing) is accurately located with respect to the bottom plate (and lower bearing) through a machined recessed lip for precise alignment of the rotor axis in accordance with an illustrative embodiment. A recessed lip 66 in the top plate 14 accurately locates top plate 14 with respect to the vacuum chamber wall 16. A similar recessed lip may also be present in the bottom plate. Positioning of the vacuum chamber wall 16 within the recessed lip 66 ensures that the alignment between the top and bottom bearing packs is accurate and precise.

FIG. 9B is a schematic drawing showing how the lower central support may be raised or lowered to maintain the desired air gap between the rotor and the lifting off-loading magnet by employing a motor-driven mechanism supported on thrust bearings in accordance with an illustrative embodiment. A worm gear 68 is used to accurately locate the axial position of the bearing pack 20 and, therefore the rotor, with respect to the air gap between it and the electromagnet. The worm gear is driven by a motor (not shown), or manually, to rotate the output shaft 70, which, by virtue of a screw mating with the bearing pack, lifts or lowers the entire assembly. With this embodiment, relative displacements between the upper and lower bearings due to deflections in the top and bottom plates resulting from rotor weight and/or vacuum pressure may be compensated for such that there is adequate axial clearance between the bottom shaft stop and the lower bearing during operation. These adjustments can be carried out remotely and, if necessary, autonomously when used in conjunction with a displacement transducer and controller.

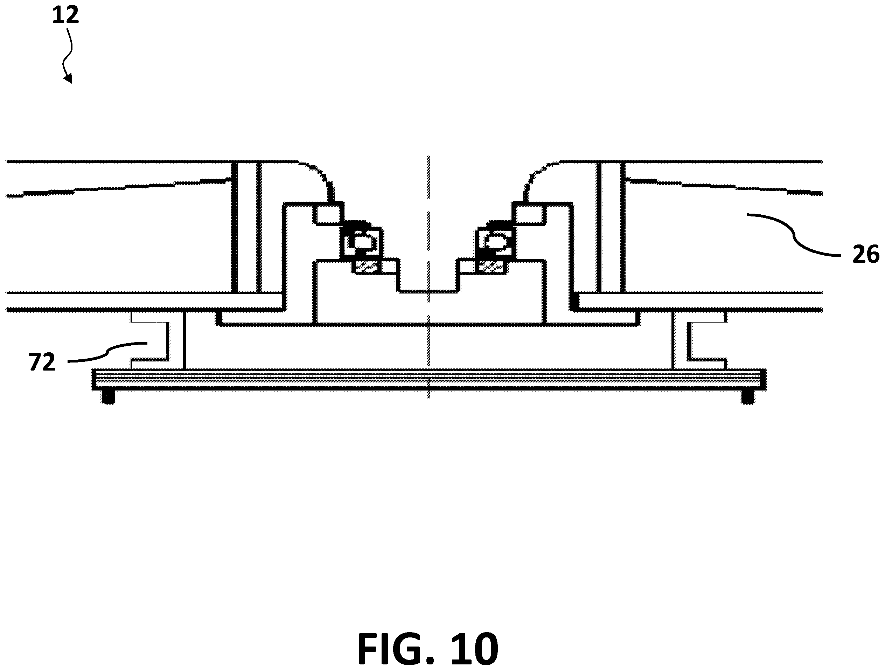

Referring to FIG. 10, a hollow cylindrical structure 72 located on the axis and at the bottom of the lower bearing pack acts as a single adjustable foot that supports the bottom plate 26 when the rotor 12 is stationary and/or the off-loader is not activated. In an embodiment, the foot includes a threaded extension that allows the length of the foot to be varied to fit the contours of the floor surface at an installation site.

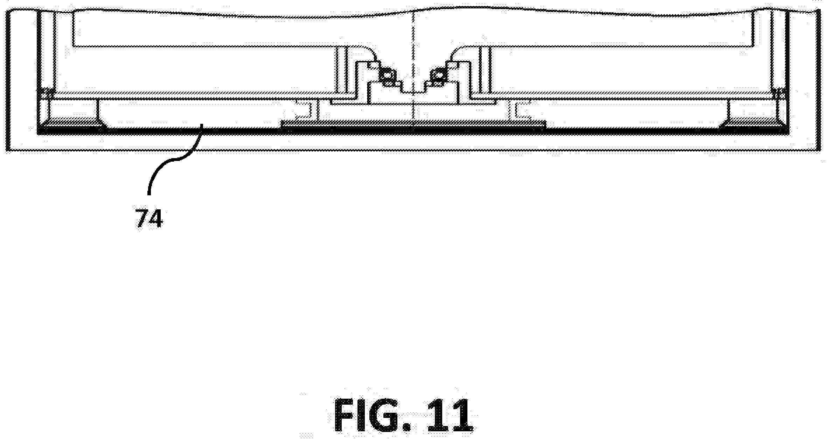

Referring to FIG. 11, the entire unit is placed on a thick rubber sheet, or a laminated assembly of steel plates and rubber sheets 74 to provide seismic isolation. In this embodiment, the flywheel support structure is placed on the rubber sheet directly or bolted to the assembly of steel plates and rubber sheets 74 that constitute a seismic isolation component. In an embodiment, the assembly of steel plates and rubber sheets 74 may be located within a vault or container configured to reduce damage resulting from a catastrophic failure of the device.

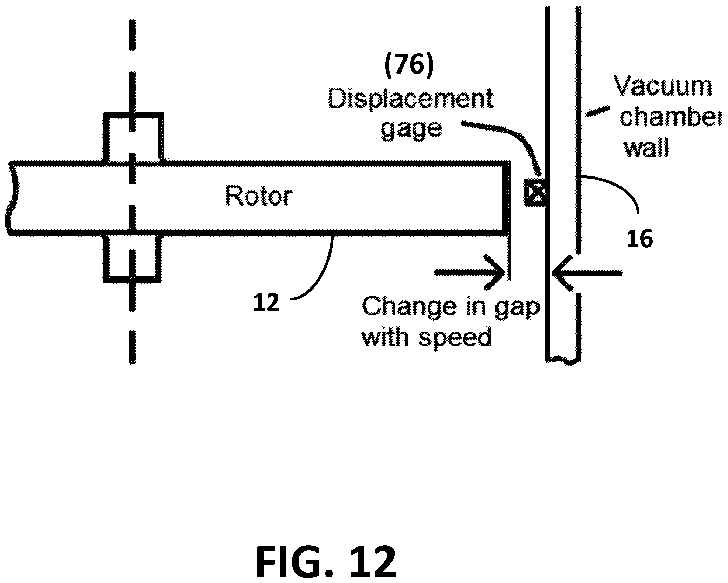

Referring to FIG. 12, non-contacting displacement sensors 76, such as capacitive gauges, located on the inside of the vacuum chamber wall 16 and spaced around the periphery of the rotor 12 determine the change in radius of the rotor with change in its speed. This information is useful to verify the numerical model as well as warn of anomalous displacement changes that may indicate impending rotor or bearing failure. In an example embodiment, a set of twelve displacement sensors placed thirty degrees apart will give a profile of the outside diameter of the rotor as it is spinning. Displacements of the periphery of the rotor can be determined every 20 microseconds using an analog-to-digital (A/D) convertor with a sampling rate of 50 kilohertz. This corresponds to a measurement of the rotor profile for every 0.72 degrees of rotation for a rotor spinning at 6000 rpm. The real-time profile as well as any out-of-roundness of the profile can be determined from the recorded data and checked against a computer model. In addition, lateral vibrational modes and mode shapes can be determined in real time.

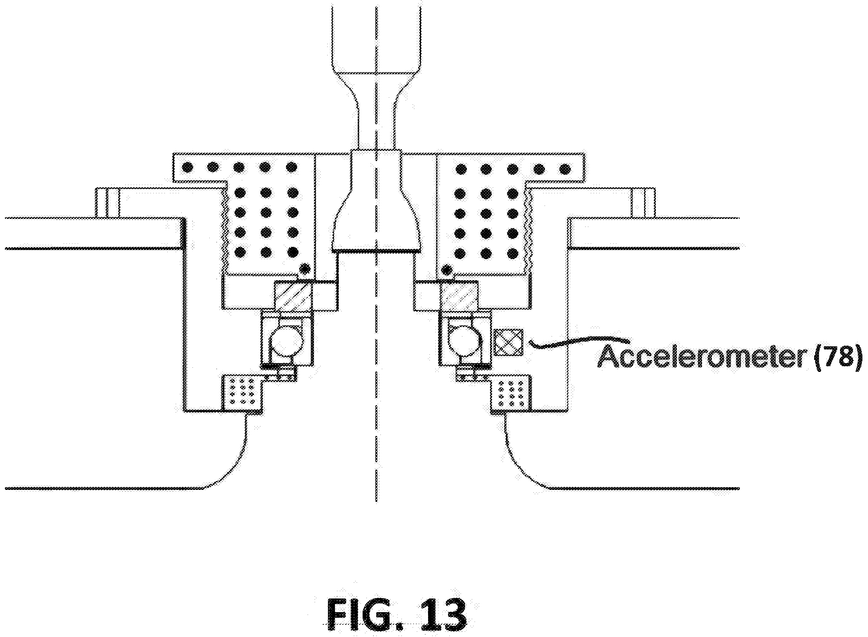

Referring to FIG. 13, two or more accelerometers 78 are mounted around the periphery of each bearing pack to measure a level of imbalance of the rotor. The amplitudes of the accelerometer signals provide information on the mass of the imbalance when the rotor speed is known. When the time signature of each accelerometer signal is correlated with the motor rotary encoder, the angular location of the net imbalance in the rotor can be identified and removed in a subsequent machining operation. In addition, changes in the accelerometer signals during operation can be used as indicators of bearing wear and/or impending failure of the system.

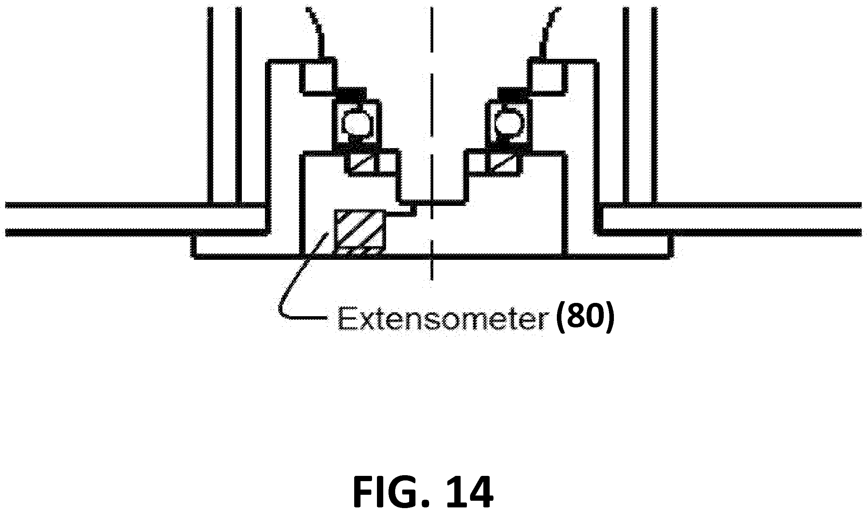

Referring to FIG. 14, a displacement gauge 80 is mounted at the base of the unit within the bearing pack to record the dynamic (axial) motion of the suspended rotor over its entire operating and pre-conditioning speed ranges to determine the speeds at which the rotor experiences each resonant mode. This information can also be used to indicate anomalous behavior of the system.

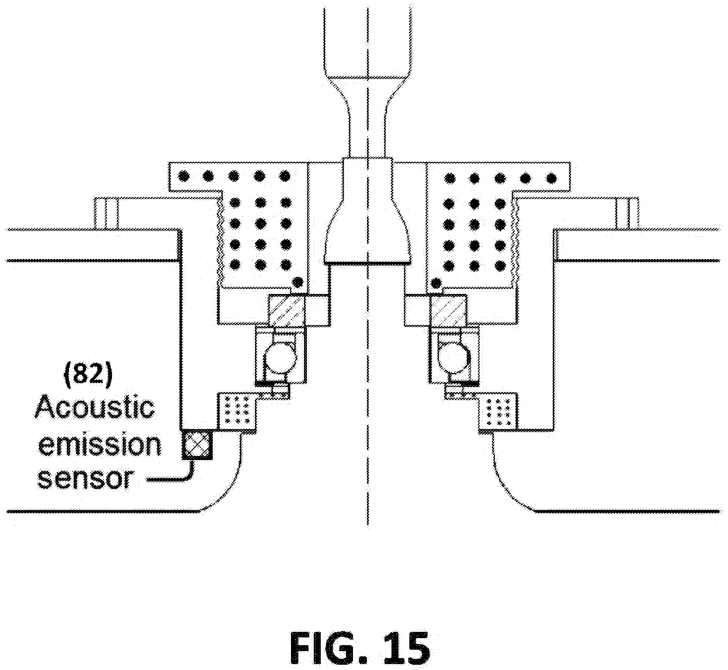

Referring to FIG. 15, acoustic emission (AE) sensors 82 are placed on the structure at several locations, including at the bearing packs and inside the vacuum housing. These sensors measure sounds emanating from bearings and or flaw propagation in the rotor thereby providing a measure of the wear or impending failure of one or more components in the system. In an embodiment, the acoustic emission sensors 82 measure high frequency (for example, 500 kHz or greater) sounds.

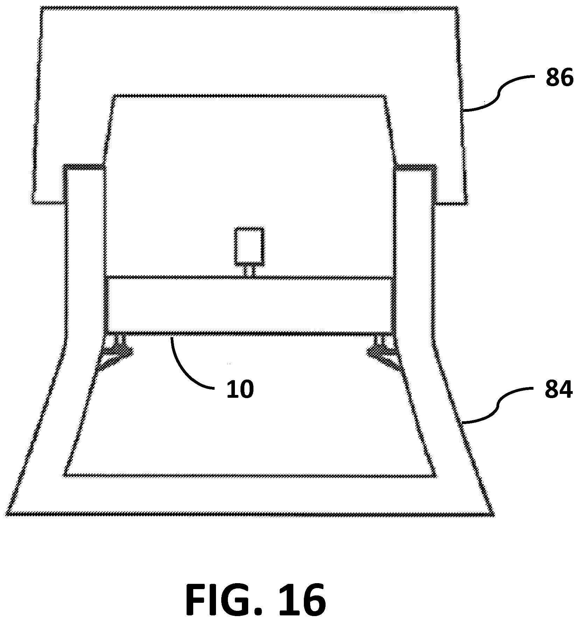

Referring to FIG. 16, a thick-walled steel and concrete containment structure 84, 86 is constructed to be in close proximity, preferably, in contact with the outside cylinder wall of the device 10. This arrangement keeps fragments resulting from rotor failure contained in rotational modes (minimizing translational modes) so that energy dissipation is facilitated by friction and particle-to-particle interaction. The containment structure has a tapered geometry 84 such that the diameter of the containment structure increases gradually with increasing depth from the bottom of the unit. At rotor failure, the fragments will tend to displace axially and be collected below the unit rather than move upward and be ejected above the surface. In an embodiment, the containment structure 84, 86 may be at least partially buried.

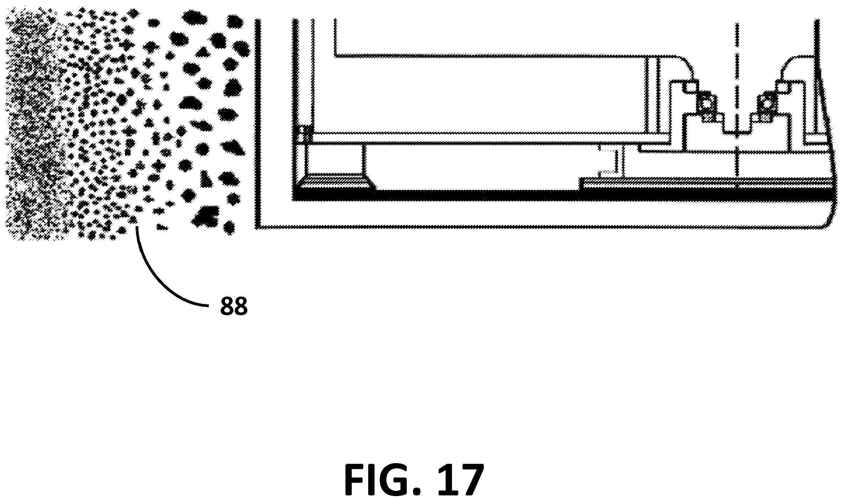

Referring to FIG. 17, an arrangement of graded aggregate 88 is placed such that aggregate size decreases with radial distance from the concrete wall. This results in an energy absorbing structure with larger porosity adjacent to the concrete containment structure and decreasing size of the particles with increasing radial distance.

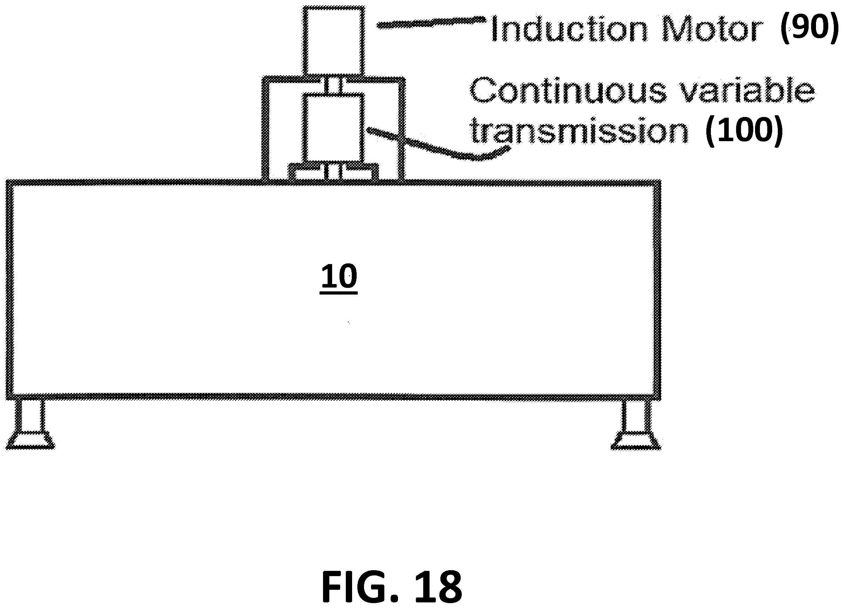

Referring to FIG. 18, flywheel device 10 is connected to an induction motor 90 through an electronic or mechanically controlled continuously variable transmission (CVT) 100 or other geared transmission. Over-driving the induction motor in this fashion past the slip speed makes it operate like a generator outputting power to the grid. Under-driving the motor by changing the gear ratio in the CVT will result in the induction motor being driven by the external power source to accelerate the rotor and thereby store energy. This is a low-cost method since it does not involve brushless DC motors, inverters, and their associated control and driver software schemes.

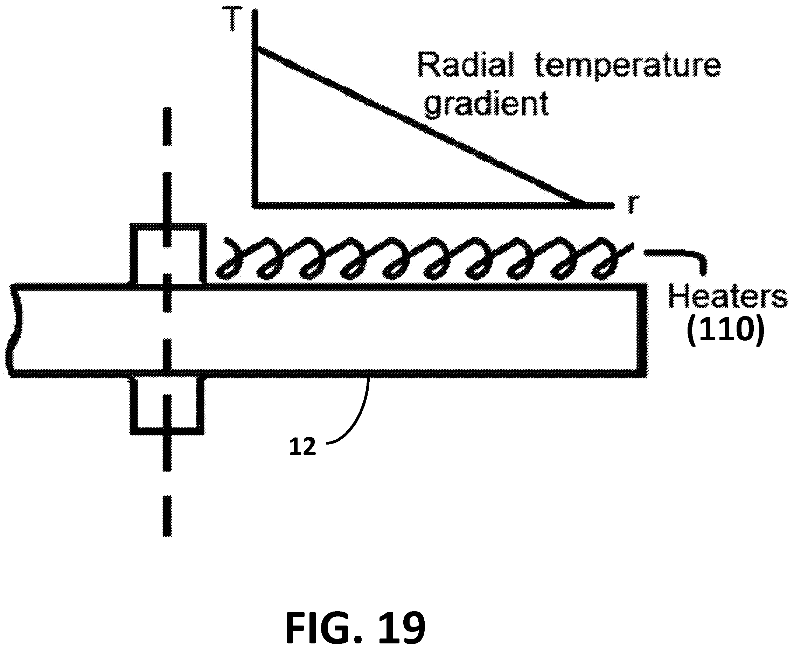

Referring to FIG. 19, a radial temperature gradient is imposed on the rotor 12 by heaters 110. When the center of the rotor is at a higher temperature than its periphery, the resulting non-uniform thermal strain results in beneficial thermal stress (compressive at the center, tensile at the periphery), which improves the overall stress state and thereby increases the energy density in the rotor. In an embodiment, the heaters may include electrically-resistive heaters or any other suitable heater known to those of skill in the art.. In an embodiment, the heaters are arranged concentric to the rotor and attached to the housing above the rotor. A specific temperature profile is produced with varying current inputs to each concentric heating element. The temperature profile is measured during operation with a linear array of pyrometers arranged radially from the center of the rotor to its periphery.

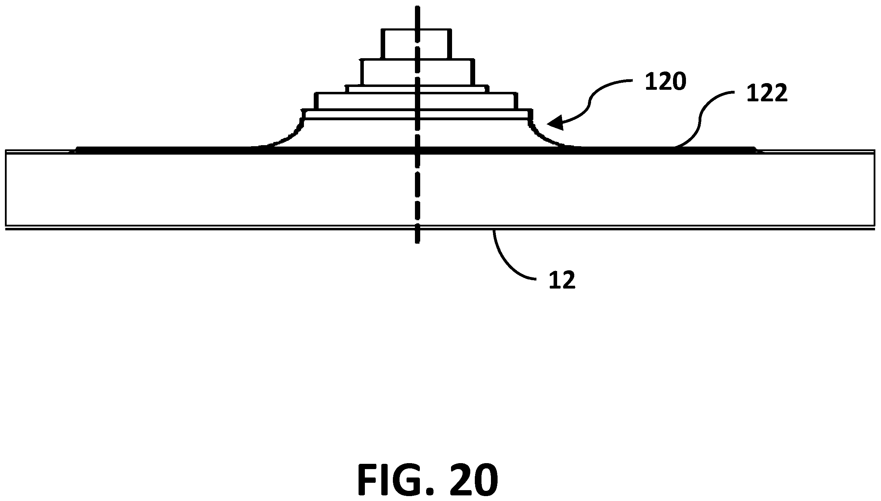

FIG. 20 illustrates a concept for using discrete, separately machined shafts 120, which may be made from an alloy steel that may be austenitic (and, therefore, non-magnetic) and adhesively bonded to the rotor 12 with a structural adhesive 122. Since the rotor is lifted directly by the magnetic off-loader, the stresses in the bond joints are low and primarily compressive, due to the axial compressive preload, and are easily accommodated by the bond strengths of conventional polymer structural adhesives. This approach allows one to use a rotor of very simple geometry that is easy to forge and machine since it does not have integral shafts.

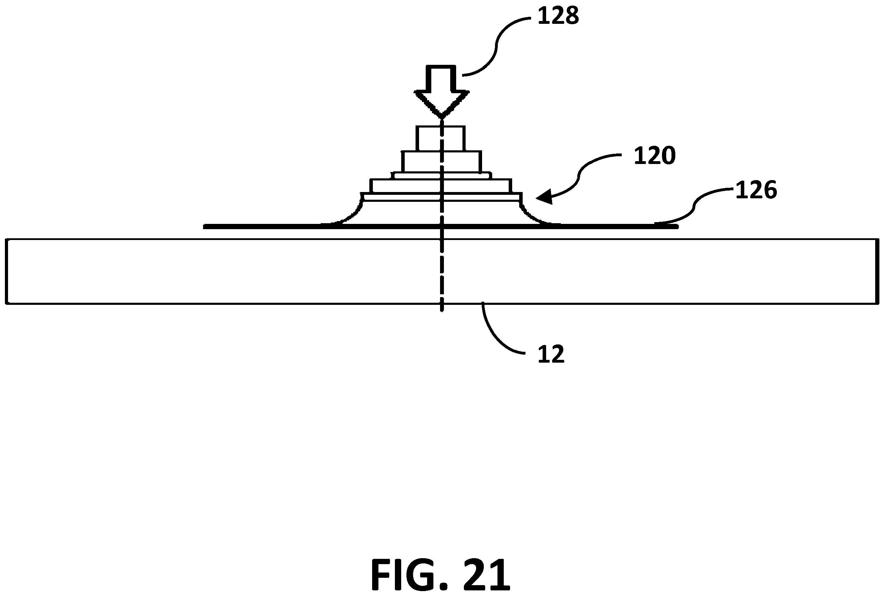

Referring to FIG. 21, the rotor 12 is a simple fixed or variable thickness disk without shafts as in FIG. 20. In this case, the shafts 120 are welded to the rotor. In some embodiments, the shafts may be welded to the motor with conventional fusion fillet welds between contact surface 126 and rotor 12. Following the welding operation, conventional heat treatment procedures remove stress concentrations introduced into the rotor at the weld locations. Since the rotor is lifted directly by the magnetic off-loader, the stresses in the welds are low.

In another embodiment, the shafts 120 are friction-welded to the rotor using a high axial force 128 to press the shaft onto a rotating rotor blank. The contact surface 126 reaches a high temperature sufficient to weld the interface. Following the welding operation, conventional heat treatment procedures remove stress concentrations introduced into the rotor at the weld. Since the rotor is lifted directly by the magnetic off-loader, the stresses in the welds are low.

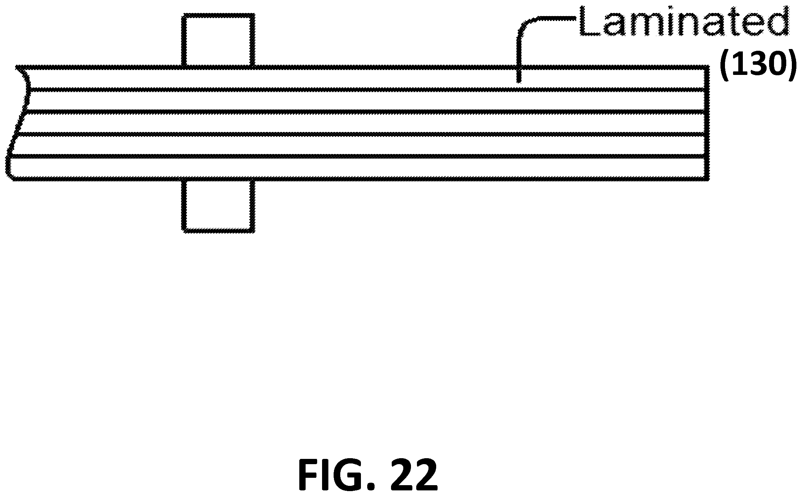

Referring to FIG. 22, the rotor is constructed from several laminated plates that are adhesively bonded together using conventional structural adhesives. In various embodiments, the adhesives may include structural epoxy adhesives, oil-tolerant polysulfide-based flexible adhesives, silicone-based adhesives, or any other suitable adhesives known to those of skill in the art. The only stress in the joints between the laminations is gravity loading which occurs when the rotor is lifted. This stress is low and easily accommodated by the adhesive tensile strength. For example, for ten laminations each 25 mm in thickness (1 inch), the tensile stress in the first lamination joint (the most highly loaded bonded joint) is less than 0.021 MPa (3 psi). Structural adhesives have tensile strengths readily exceeding 7 MPa (1000 psi). Thin laminas can be individually heat-treated to higher strengths thereby increasing the rotor energy density. In addition, laminated rotors have a high degree of redundancy since flaw propagation in one lamina tends to be restricted by the adjacent laminas. In addition, failure of one lamina does not result in failure of the entire rotor. Also, since the laminas are thin, they are in a state of biaxial plane stress when the rotor is spinning, which is a more uniform stress state than the biaxial plane strain state that exists in a thick monolithic rotor. In addition, thin plates can be heat-treated to a higher yield strength than thick plates; thus, a rotor comprising of thin plates laminated together will exhibit a higher energy density than in a monolithic rotor of the same total thickness.

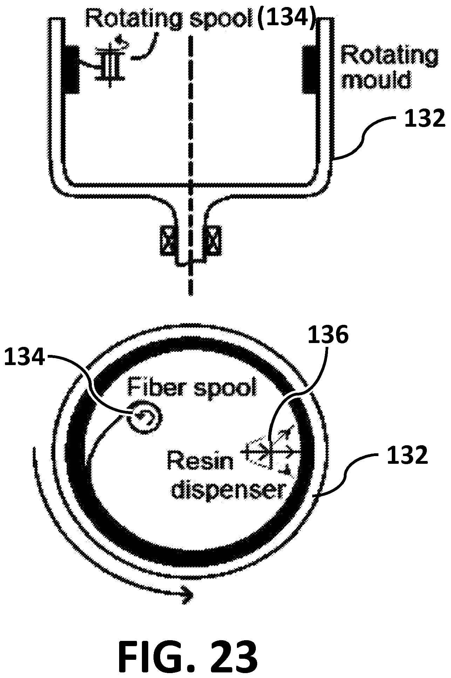

Referring to FIG. 23, a composite fiber-reinforced ring is manufactured using a high-speed rotating cylindrical mold 132 into which is fed a fiber bundle from a rotating spool 134 located inside the mold whose spin axis is parallel to the rotating mold axis. As the fiber bundle is unwound from the spool, it is held against the inside surface of the rotating mold by centrifugal force. Room temperature curing pre-catalyzed thermosetting resin is sprayed from a nozzle 136 perpendicular to the vertical wall of the rotating mold onto the fiber bundle lying against the wall. The high g-force provides adequate pressure for the liquid resin to infiltrate the fiber bundle as curing of the resin proceeds. When the cure is complete, the mold is removed and the ring ejected from the mold. This process is 10 to 50 times faster than filament winding, the conventional process for manufacturing composite rings. For example, fiber dispensing rates of 4500 m/min are possible compared to filament winding rates of 60 - 90 m/min. Alternatively, a resin system that cures at elevated temperature may be used together with a method for heating the mold surface either by internal electrical resistance heaters, gas fired heaters, or infrared lamps illuminating the mold from the inside. Alternatively, the rotating mold has a central shaft and shaft lip seals so that infiltration and curing may be done in vacuum to minimize voids in the composite. Additional spools may be simultaneously deployed such that processing times can be further reduced and/or different fibers (glass, carbon, Kevlar, metal wires, etc.) can be dispensed simultaneously or in sequence such that the final composite ring has a layered structure of different fiber types that may be advantageous in certain applications. Alternatively, different resin systems can be applied in sequence to vary properties radially. For example, a composite ring can be readily fabricated in this manner with carbon fibers at its outside diameter and glass fibers at its inside diameter. Due to the high g-loading in this application, void-free composite rings can be produced at high rates.

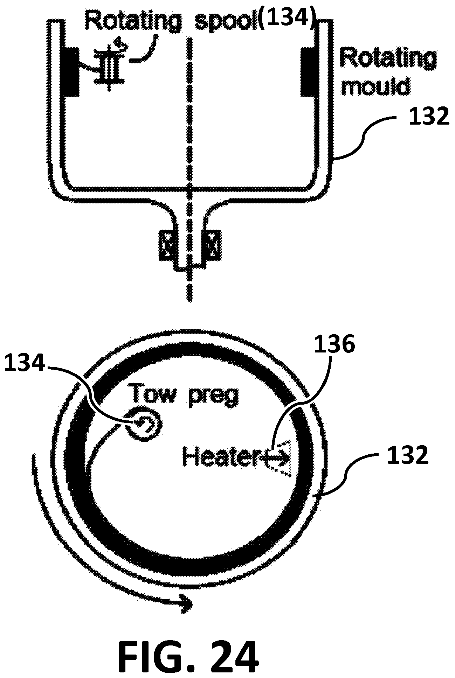

Referring to FIG. 24, a pre-impregnated and partially cured fiber bundle (tow preg, 138) is dispensed from a spool 134 as in FIG 23 into a high-speed rotating cylindrical mold 132. An internal 142 (or external) heater heats the dispensed tow preg enabling it to flow and cure.

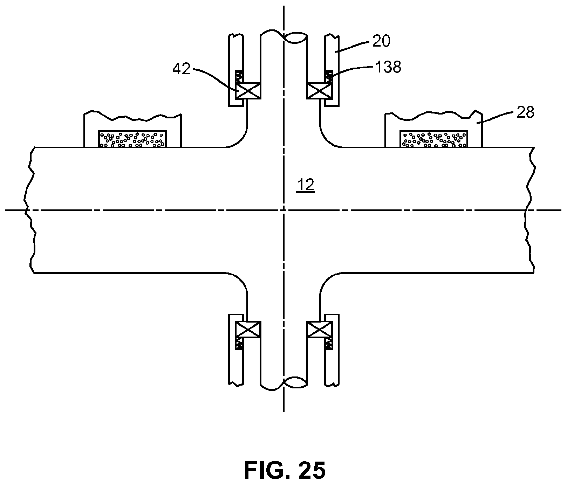

FIG. 25 is a schematic showing two upper and lower springs that enable stable operation of an electromagnet for lifting the rotor in accordance with an illustrative embodiment. In FIG. 25, compact springs 138 such as disk washers or wavy springs are placed above the upper bearing 42 and below the lower bearing within the bearing cartridge 20. This arrangement provides for more stable control of the position of the rotor 12 with respect to the electromagnet 28 current. Since the coil current required to lift the rotor rapidly decreases with decreasing gap, the addition of the spring whose resisting force increases with gap reduction compensates for the magnet's characteristics.

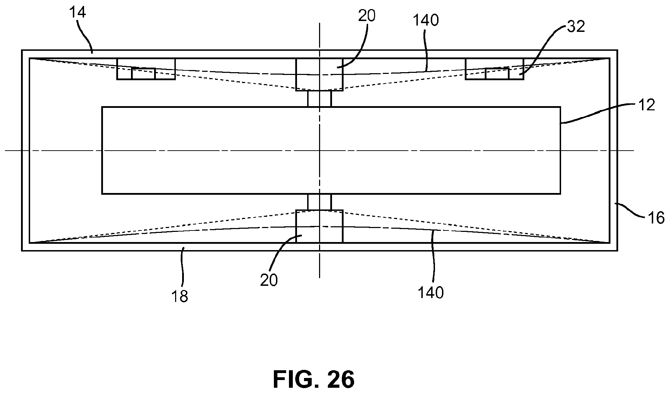

FIG. 26 is a schematic drawing showing a vacuum for assisting the lifting of the rotor to reduce the gap with respect to the lifting electromagnet in accordance with an illustrative embodiment. Referring to FIG. 26, the application of vacuum to the housing 14, 16, 18 results in the lifting of the rotor 12 relative to bearing cartridge 20 by the deflection 140 of the upper and lower housing sections 14 and 18. This motion results in reduction of the distance between the rotor 12 and its final position with respect to the electromagnet 32. This feature enables a reduction in the DC power required to traverse the distance between the rotor and its final operating position. For example, in one test involving a 6-1/2 feet (2 meter) diameter housing, application of the vacuum reduced the relative distance between the rotor and the magnet by more than 0.10 inches (2.5 mm). To accomplish this with the magnet alone would require doubling the current in the electromagnet (and therefore the size of the power supply). The degree of vacuum can be adjusted to control the rate at which the rotor-to-magnet distance is traversed.

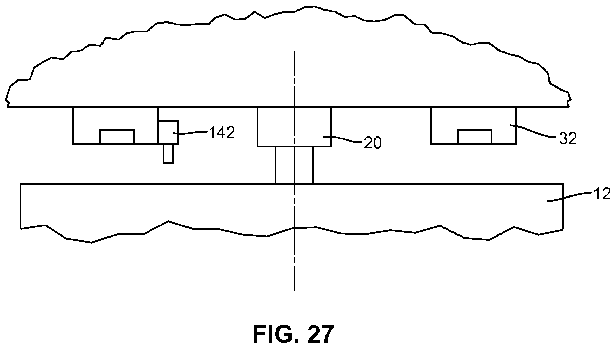

FIG. 27 shows a displacement transducer for directly measuring the rotor-to-magnet gap in accordance with an illustrative embodiment. Referring to FIG. 27, a displacement transducer such as a linear differential transformer (LVDT) or capacitive gauge, 142 directly measures the gap between the rotor 12 and magnet 32. A contacting displacement transducer such as the LVDT is used after assembly to ensure that the desired gap is achieved when the electromagnet is energized and when the vacuum is applied. A body of the LVDT is coupled to the housing inside the vacuum envelope with its probe contacting the rotor to make the measurement. The probe is lifted off the rotor by a solenoid before the rotor begins to spin. A non-contacting displacement transducer such as a capacitive gage is similarly oriented to directly measure the gap. A non-contacting displacement transduce can make measurements whether the rotor is stationary or spinning and has the advantage of monitoring the gap over the rotor's speed range.

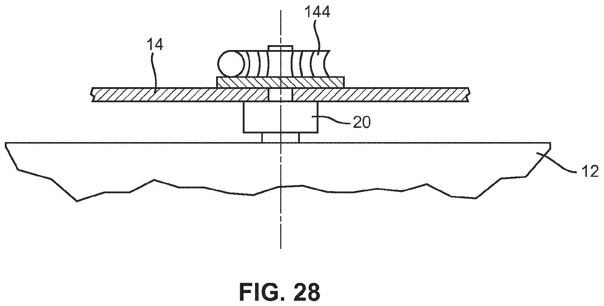

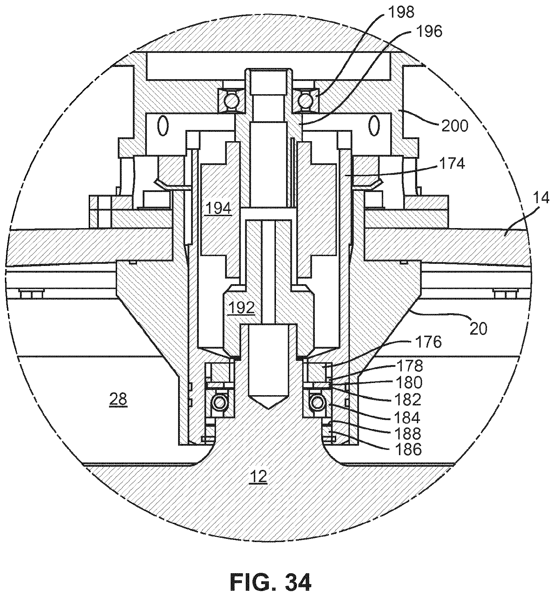

FIG. 28 shows an arrangement in which a motorized upper bearing is used to adjust the axial position of the rotor in the flywheel in accordance with an illustrative embodiment. In FIG. 28, a motorized upper bearing 144 mounted on the upper housing 14 translates the position of the stop in the bearing cartridge 20 which in turn sets the position of the rotor 12. By coupling this feature with a control system, the electromagnet current can be adjusted for various gap conditions for optimizing flywheel performance and positioning with the housing. The position of the rotor is set by the inner element 176 in the bearing cartridge 20 (as seen in Fig. 34). Rotating the inner component 176 moves the inner component 176 via the threaded interface between inner component 176 and the body of the bearing cartridge 20, which in turn sets the rotor position when the electromagnet lifts it against inner component 176. The addition of a motorized feature to the bearing cartridge 20 enables this adjustment to be performed during flywheel spinning. A small motor coupled with a worm gear speed reducer enables small displacements of inner component 176 up or down, thereby changing the rotor-to-magnet gap.

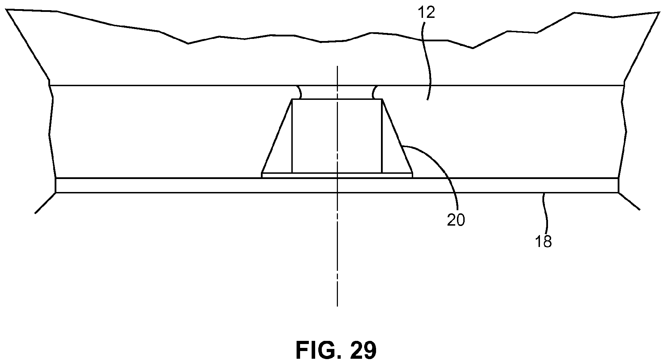

FIG. 29 shows a conically shaped lower bearing cartridge 20 mounted on the lower housing 18. Failure of the bearing results in the rotor 12 melting the bearing cartridge so that it is slowed in a controlled manner. When bearing failure occurs, the bearing seizes and fractures leading the spinning rotor to drop and contact the top of the conically shaped lower bearing cartridge 20. The resulting friction quickly melts the top of the conical shape, which begins subsequently to deform and widen its contact surface. As the rotor displaces further, the increasing diameter of the conical shape progressively increases the contact surface area and the resisting frictional force to slow the rotor in a controlled fashion.

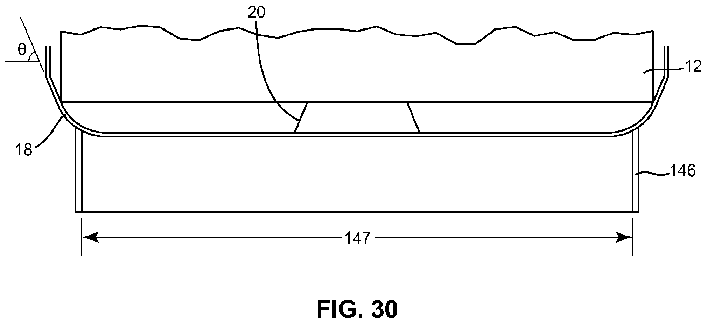

FIG. 30 shows the conformation of the lower housing 18 which is shaped such that on bearing failure, the spinning rotor 12 will rest on the housing on its lower edge. The housing is shaped at an angle *θ* so that the lower edge will melt in a controlled fashion until the rotor comes to a rest. The melting layer deposited on the housing prevents it from being cut or penetrated by the rotor. A cylindrical support 146 of diameter 147 provides support to the rotor housing.

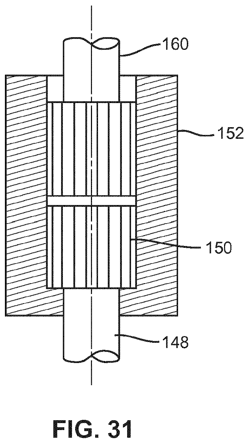

FIG. 31 shows an internal spline 150 attached to the rotor shaft 148. The internal spline 150 meshes with an external splined cylinder 152. The external splined cylinder 152 meshes with another internal splined shaft attached to the motor 160. This arrangement provides for relative axial motion between the two shafts while torque is transmitted between the motor and the rotor. Such axial motion enables improved lifting and lowering the rotor while it is spinning. In addition, the small clearance between the internal and external splines allows for small angular mis-alignments between the rotor and motor shaft axes.

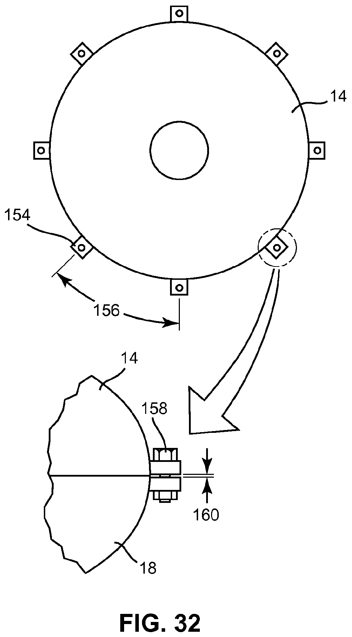

Referring to FIG. 32, welded tabs 154 are attached to each of the upper 14 and lower 18 housing sections. The upper and lower housing sections 14, 18 may then be joined by bolting together aligned tabs 154 on the upper 14 and lower 18 housing sections, respectively, with bolts 158. Upon complete seating of the two housing sections, a small gap 160 exists between the tab faces, which ensures a snug fit between the upper and lower housing sections 14, 18. The tabs and corresponding bolts are spaced circumferentially around each of the upper and lower housing sections 14, 18 by a distance 156. In an embodiment, tabs 154 have a lower strength than the upper and lower housing sections 14, 18. Should failure of the vacuum occur during high speed operation, the incoming air will be heated by the spinning rotor which in turn will result in rapid expansion of the air and pressure increase within the housing. In this embodiment, plastic deformation of the weaker tabs allow the stronger housings to separate and release the pressure rapidly without separation or ejection of the housings.

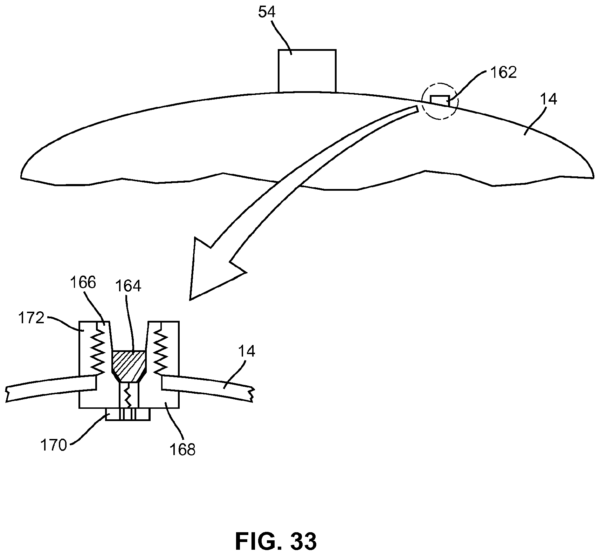

FIG. 33 shows a pressure relief valve 162 in the vacuum housing 14. The pressure relieve valve 162 allows for vacuum sealing and yet will release any overpressure within the vacuum housing 14 should the vacuum fail. The pressure relief valve 162 is attached to the outside of the vacuum housing 14. A feed-through structure 168 includes an O-ring seal that is pressed against the vacuum housing 14 with a nut 172 that screws over a threaded section 166, which is part of the feed-through structure 168. The feed-through structure 168 has an internal hole containing a tapered seat in which is seated a valve 164 that is held against the tapered seat by a spring. When the air inside the vacuum housing 14 is evacuated, the external atmospheric pressure on the pressure relief valve 164 augments the force from the spring to increase the seating force of pressure relief 164 on the feed-through structure 168, further ensuring a vacuum-tight seal. If the vacuum inside the vacuum housing 14 is lost due to a rotary seal or hose failure, the incoming air from the failure point may be aerodynamically heated by the spinning rotor, thereby rapidly increasing the pressure inside the vacuum housing 14 to values that may greatly exceed atmospheric pressure. Due to the large surface area of the vacuum housing 14, a small positive pressure results in a large force that can cause failure of the joint between various components of the vacuum housings 14 Such a failure could result in the ejection of the vacuum housing 14, turning it into a projectile with potentially catastrophic results. For example, a pressure of 5 psi acting on a housing of 7 feet in diameter exerts a force of 3.5 tons on the housing. In this embodiment, any positive pressure that develops inside the housing causes the pressure relief valve 162 to lift against the spring, allowing the air to be released via an orifice 170. The spring rate and the initial preload in the spring can be designed to provide safe release of internal pressure for a given orifice size and pressure rise characteristic.

FIG. 34 shows an embodiment for the bearing cartridge 20 that allows for removal and replacement of the bearing, load sensor, and seal without having to remove the rotor. Bearing cartridge 20 includes an inner component 174 which is mounted to the vacuum housing 14 (also called the upper housing). Located within the inner component 174 are the load sensor 176, sensor carrier 178, preload spring 180, spring carrier 182, bearing 184, rotary seal 186, and retaining rings 188. The position of the rotor 12 is maintained with respect to the magnet 28 by the setting of the inner component of the bearing cartridge 174. A lower coupling shaft 192 is attached to the motor via a gear coupling 194 and an upper coupling shaft 196 which is located by an isolation radial ball bearing 198. The motor/generator is mounted to a motor support structure 200. In an embodiment, the motor support structure 200 is a bell housing that aligns the motor shaft axis with respect to the rotor shaft axis. Unbolting the motor support structure 200 from the vacuum housing 14 allows for the motor/motor support structure/coupling shaft assembly to be lifted off the rotor. Next, unscrewing the inner component 174 separates it from the bearing cartridge 20. Once the inner component 174 is removed, the load sensor 176, the preload spring 180, the bearing 184, and the rotary seal 186 may be readily removed for inspection and, if necessary, replacement.

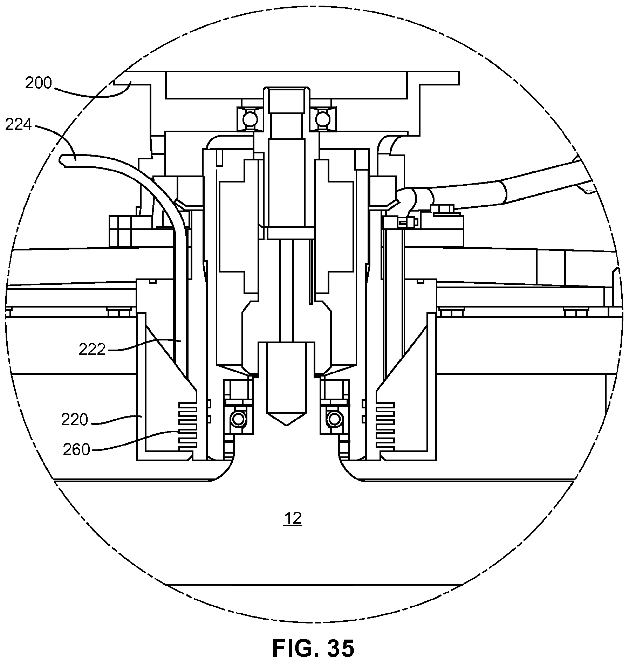

In FIG. 35, a water-cooled jacket 220 is shown surrounding the bearing cartridge. A set of fins 260 machined integral with the wall of the cooling jacket provides good thermal coupling with the bearing facilitating efficient heat removal. An inlet pipe 222 provides the cooling fluid which circulates within the cooling jacket and exits via an outlet pipe to a radiator (not shown). The inlet pipe is connected via a hose 224 to the cold side of the radiator manifold.

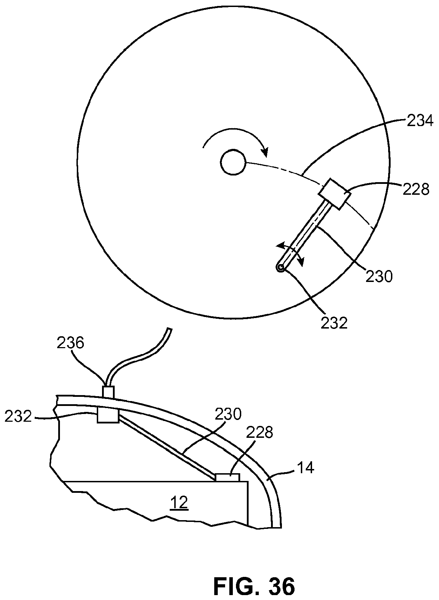

FIG. 36 shows an embodiment for the *in-situ* inspection of the rotor using a scanned ultrasonic transducer 228. The transducer is mounted to the end of a rotating arm 230 which pivots from a joint 232 which also is part of a vacuum-sealed port 236 through which cabling for the signal and power cables are threaded though the upper housing 14. The transducer rests directly on the rotor 12 via a gel coupling medium that is injected through a porous sponge at the leading edge of the transducer. Rotation of the arm through an arc 234 while the rotor is slowly rotating enables inspection of the complete volume of the rotor. The transducer is fitted with appropriately angled waveguides to penetrate the rotor material below the shaft at its center and through its entire thickness.

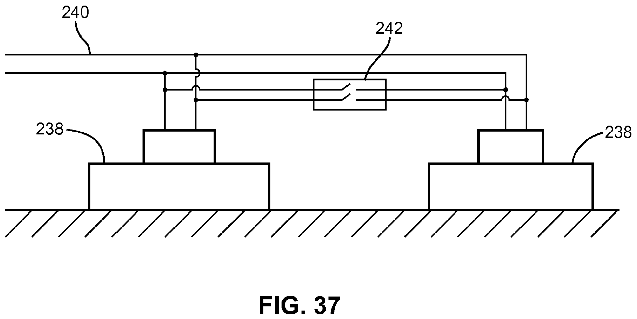

FIG. 37 shows an arrangement of two scaled flywheels 238 driven in tandem mode with one charging while the other is discharging to provide life cycle data in an accelerated life test. The grid 240 provides the power to cover the losses in this arrangement. Component 242 is a switch between the two flywheels 238.

One or more methods have been described herein and one or more flow diagrams may have been used herein. The discussion of the operations of the method and the use of flow diagrams is not meant to be limiting with respect to the order of operations performed. The herein described subject matter sometimes illustrates different components contained within, or connected with, different other components. It is to be understood that such depicted architectures are merely illustrative, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, it should be understood that any references to controllers, transmitters, receivers, and/or components that perform any type of processing or rendering of determinations or decisions may be performed by a computing device that includes a processor and memory that stores processor-executable instructions.

The foregoing description of illustrative embodiments has been presented for purposes of illustration and of description. It is not intended to be exhaustive or limiting with respect to the precise form disclosed, and modifications and variations are possible in light of the above teachings or may be acquired from practice of the disclosed embodiments. It is intended that the scope of the invention be defined by the claims appended hereto and their equivalents.

## Claims

1. A flywheel energy storage device comprising:
a sealed housing (14, 16, 18) comprising a top plate (14), a bottom plate (18), and a cylindrical vertical enclosure (16);
a rotor (12) disposed within the sealed housing (14, 16, 18);
an upper bearing pack (20) having a bearing pack outer housing (46) arranged on the top plate (14), comprising one or more rolling contact bearings (42) disposed between the rotor (12) and the top plate (14), and
a lower bearing pack (20) having a bearing pack outer housing (46) arranged on the bottom plate (18), comprising one or more rolling contact bearings (42) disposed between the rotor (12) and the bottom plate (18);
an off-loading magnet (28) configured to provide a vertical off-loading force that lifts the rotor (12) against the rolling contact bearings (42) of the upper bearing pack (20) in a vertical direction and off of the rolling contact bearings (42) of the lower bearing pack (20) in a vertical direction; and
**characterised in that** it comprises a strain gauge (62) configured to monitor strain on the rotor (12) in real-time, wherein the strain gauge (62) is bonded to a surface of the rotor (12) inside the cylindrical vertical enclosure (16) and oriented along a direction parallel and tangential to the radial vector, and wherein the strain gauge comprises a wireless transmitter (62) to wirelessly transmit strain measurements to a receiver inside the cylindrical vertical enclosure (16).

2. The flywheel energy storage device of claim 1, further comprising angular contact bearings located at ends of a shaft connected to the rotor (12), wherein the angular contact bearings are configured to provide axial support of the rotor (12) during operation to resist precession-induced loads.

3. The flywheel energy storage device of claim 1, further comprising two or more accelerometers (78) mounted around a periphery of the bearing housing (46) and configured to measure an imbalance in the rotor (12).

4. The flywheel energy storage device of claim 1, further comprising a displacement gauge (80) mounted at a base of the bearing housing (46) and configured to measure dynamic axial motion of the rotor (12).

5. The flywheel energy storage device of claim 1, further comprising a plurality of acoustic emission sensors (82) located at the bearing housing (46) and within the sealed housing (14, 16, 18) to measure sounds within the flywheel device.

6. The flywheel energy storage device of claim 1, further comprising a heater (110) configured to impose a radial temperature gradient on the rotor (12) such that a center of the rotor (12) is at a higher temperature than a periphery of the rotor (12).

7. The flywheel energy storage device of claim 1, further comprising a seismic isolation component (34, 36, 74) configured to provide seismic isolation for the flywheel device.

8. The flywheel energy storage device of claim 7, wherein the seismic isolation component (34, 36, 74) comprises at least one of adjustable feet (34) externally mounted to the sealed housing (14, 16, 18) and to a flexible pad (36) or a continuous flexible support sheet (74) positioned under a bottom plate (18) of the sealed housing (14, 16, 18).

9. The flywheel energy storage device of claim 1, further comprising a plurality of non- contacting displacement sensors (76) located inside a vacuum chamber within with the rotor (12) is disposed, wherein the plurality of non-contacting displacement sensors (76) are positioned about a periphery of the rotor (12), wherein the plurality of non-contacting displacement sensors (76) are configured to measure a change in radius of the rotor (12) as it spins, and wherein the plurality of non-contacting displacement sensors (76) comprises a plurality of capacitive gauges.

10. The flywheel energy storage device of claim 1, wherein the magnet (28) comprises a permanent magnet.

11. The flywheel energy storage device of claim 10, further comprising:
a remotely-controllable actuator configured to adjust a position of the rotor (12) within the sealed housing (14, 16, 18) to control an air gap between the rotor (12) and the permanent magnet (28), wherein the actuator comprises a motor-operated worm gear (68); and
a controller configured to control the actuator in response to measurements from a load sensor (44), wherein the load sensor (44) is configured to measure lifting magnet forces.

12. The flywheel energy storage device of claim 1, further comprising an induction motor (90) connected to a continuously variable transmission (100).

13. The flywheel energy storage device of claim 1, wherein a first end of the cylindrical vertical enclosure (16) is positioned within a recessed lip (66) of the top plate (14), and wherein a second end of the cylindrical vertical enclosure (16) is positioned within a recessed lip of the bottom plate (18).

14. The flywheel energy storage device of claim 1, wherein the disc-shaped rotor (12) comprises a thickness-to-diameter ratio of 15% or less.

15. The flywheel energy storage device of claim 1, wherein the disc-shaped rotor (12) comprises a thickness of 0.25 m or less.

## Patentansprüche

1. Schwungrad-Energiespeichervorrichtung, die umfasst:
ein abgedichtetes Gehäuse (14, 16, 18), das eine Deckplatte (14), eine Bodenplatte (18) und eine zylindrische vertikale Verkleidung (16) umfasst;
einen Rotor (12), der im Inneren des abgedichteten Gehäuses (14, 16, 18) angeordnet ist;
einen oberen Lagersatz (20) mit einem Lagersatz-Außengehäuse (46), der an der Deckplatte (14) angeordnet ist und ein oder mehrere Wälzlager (42) umfasst, das/die zwischen dem Rotor (12) und der Deckplatte (14) angeordnet ist/sind, sowie
einen unteren Lagersatz (20) mit einem Lagersatz-Außengehäuse (46), der an der Bodenplatte (18) angeordnet ist und ein oder mehrere Wälzlager (42) umfasst, das/die zwischen dem Rotor (12) und der Bodenplatte (18) angeordnet ist/sind, und
einen Entlastungs-Magneten (28), der so ausgeführt ist, dass er eine vertikale Entlastungskraft erzeugt, die den Rotor (12) in einer vertikalen Richtung an die Wälzlager (42) des oberen Lagersatzes (20) anhebt und in einer vertikalen Richtung von den Wälzlagern (42) des unteren Lagersatzes (20) abhebt; und
**dadurch gekennzeichnet, dass** sie einen Dehnungsmessstreifen (62) umfasst, der so ausgeführt ist, dass er Dehnung an dem Rotor (12) in Echtzeit überwacht, wobei der Dehnungsmessstreifen (62) mit einer Oberfläche des Rotors (12) im Inneren der zylindrischen vertikalen Verkleidung (16) verbunden ist und in einer Richtung parallel und tangential zu dem radialen Vektor ausgerichtet ist, und wobei der Dehnungsmessstreifen einen drahtlosen Sender (62) umfasst, um Dehnungsmessungen drahtlos an einen Empfänger im Inneren der zylindrischen vertikalen Verkleidung (16) zu übertragen.

2. Schwungrad-Energiespeichervorrichtung nach Anspruch 1, die des Weiteren Schräg-Wälzlager umfasst, die an Enden einer mit dem Rotor (12) verbundenen Welle angeordnet sind, wobei die Schräg-Wälzlager so ausgeführt sind, dass sie axiale Lagerung des Rotors (12) In Funktion bewirken, um durch Präzession verursachten Lasten Widerstand entgegenzusetzen.

3. Schwungrad-Energiespeichervorrichtung nach Anspruch 1, die des Weiteren zwei oder mehr Beschleunigungsmesser (78) umfasst, die um einen Umfang des Lagergehäuses (46) angebracht und so ausgeführt sind, dass sie eine Unwucht an dem Rotor (12) messen.

4. Schwungrad-Energiespeichervorrichtung nach Anspruch 1, die des Weiteren einen Wegaufnehmer (80) umfasst, der an einer Basis des Lagergehäuses (46) angebracht und so ausgeführt ist, dass er dynamische Axialbewegung des Rotors (12) misst.

5. Schwungrad-Energiespeichervorrichtung nach Anspruch 1, die des Weiteren eine Vielzahl von Schallemissions-Sensoren (82) umfasst, die an dem Lagergehäuse (46) und im Inneren des abgedichteten Gehäuses (14, 16, 18) angeordnet sind, um Geräusche innerhalb der Schwungradvorrichtung zu messen.

6. Schwungrad-Energiespeichervorrichtung nach Anspruch 1, die des Weiteren eine Heizeinrichtung (110) umfasst, die so ausgeführt ist, dass sie einen radialen Temperaturgradienten an dem Rotor (12) bewirkt, so dass eine Mitte des Rotors (12) eine höhere Temperatur hat als ein äußerer Rand des Rotors (12).

7. Schwungrad-Energiespeichervorrichtung nach Anspruch 1, die des Weiteren eine seismische Isolierungs-Komponente (34, 36, 74) umfasst, die so ausgeführt ist, dass sie seismische Isolierung für die Schwungradvorrichtung bewirkt.

8. Schwungrad-Energiespeichervorrichtung nach Anspruch 7, wobei die seismische Isolierungs-Komponente (34, 36, 74) verstellbare Füße (34), die außen an dem abgedichteten Gehäuse (14, 16, 18) und an einem flexiblen Polster (36) angebracht sind, oder/und eine durchgehende flexible Auflagefolie (74) umfasst, die unter einer Bodenplatte (18) des abgedichteten Gehäuses (14, 16, 18) positioniert ist.

9. Schwungrad-Energiespeichervorrichtung nach Anspruch 1, die des Weiteren eine Vielzahl kontaktloser Weg-Sensoren (76) umfasst, die im Inneren einer Vakuumkammer innerhalb des Rotors (12) angeordnet sind, wobei die Vielzahl kontaktloser Weg-Sensoren (76) um einen Umfang des Rotors (12) herum positioniert sind, die Vielzahl kontaktloser Weg-Sensoren (76) so ausgeführt sind, dass sie eine Änderung des Radius des Rotors (12) messen, wenn er sich dreht, und die Vielzahl kontaktloser Weg-Sensoren (76) eine Vielzahl kapazitiver Messelemente umfasst.

10. Schwungrad-Energiespeichervorrichtung nach Anspruch 1, wobei der Magnet (28) einen Permanentmagneten umfasst.

11. Schwungrad-Energiespeichervorrichtung nach Anspruch 10, des Weiteren umfassend:
ein fernsteuerbares Stellglied, das so ausgeführt ist, dass es eine Position des Rotors (12) im Inneren des abgedichteten Gehäuses (14, 16, 18) einstellt, um einen Luftspalt zwischen dem Rotor (12) und dem Permanentmagneten (28) zu steuern, wobei das Stellglied ein motorgetriebenes Schneckengetriebe (68) umfasst; und
eine Steuerungseinrichtung, die so ausgeführt ist, dass sie das Stellglied in Reaktion auf Messungen von einem Last-Sensor (44) steuert, wobei der Last-Sensor (44) so ausgeführt ist, dass er hebende Magnetkräfte misst.

12. Schwungrad-Energiespeichervorrichtung nach Anspruch 1, die des Weiteren einen Induktionsmotor (90) umfasst, der mit einem stufenlosen Getriebe (100) verbunden ist.

13. Schwungrad-Energiespeichervorrichtung nach Anspruch 1, wobei ein erstes Ende der zylindrischen vertikalen Verkleidung (16) innerhalb einer ausgesparten Lippe (66) der Deckplatte (14) positioniert ist, und ein zweites Ende der zylindrischen vertikalen Verkleidung (16) innerhalb einer ausgesparten Lippe der Bodenplatte (18) positioniert ist.

14. Schwungrad-Energiespeichervorrichtung nach Anspruch 1, wobei der scheibenförmige Rotor (12) ein Dicke-zu-Durchmesser-Verhältnis von 15% oder weniger umfasst.

15. Schwungrad-Energiespeichervorrichtung nach Anspruch 1, wobei der scheibenförmige Rotor (12) eine Dicke von 0,25 m oder weniger umfasst.

## Revendications

1. Dispositif de stockage d'énergie à volant d'inertie comprenant :
un boîtier scellé (14, 16, 18) comprenant une plaque de dessus (14), une plaque de dessous (18) et un boîtier vertical cylindrique (16) ;
un rotor (12) disposé au sein du boîtier scellé (14, 16, 18) ;
un bloc de palier supérieur (20) présentant un boîtier extérieur de bloc de palier (46) disposé sur la plaque du dessus (14), comprenant un ou plusieurs paliers de contact à roulements (42) disposés entre le rotor (12) et la plaque du dessus (14), et
un bloc de palier inférieur (20) présentant un boîtier extérieur de bloc de palier (46) disposé sur la plaque du dessous (18), comprenant un ou plusieurs paliers de contact à roulements (42) disposés entre le rotor (12) et la plaque du dessous (18) ;
un aimant de décharge (28) configuré pour fournir une force de décharge verticale qui lève le rotor (12) contre les paliers de contact à roulements (42) du bloc de palier supérieur (20) dans une direction verticale et en s'éloignant des paliers de contact à roulements (42) du bloc de palier inférieur (20) dans une direction verticale ; et
**caractérisé en ce qu'**il comprend
une jauge de contrainte (62) configurée pour surveiller une contrainte sur le rotor (12) en temps réel, dans lequel la jauge de contrainte (62) est liée à une surface du rotor (12) au sein du boîtier vertical cylindrique (16) et orientée le long d'une direction parallèle et tangente au vecteur radial, et dans lequel la jauge de contrainte comprend un émetteur sans fil (62) pour transmettre sans fil des mesures de contrainte à un récepteur au sein du boîtier vertical cylindrique (16) .

2. Le dispositif de stockage d'énergie à volant d'inertie de la revendication 1, comprenant en outre des paliers de contact angulaire situés à des extrémités d'un arbre connecté au rotor (12), dans lequel les paliers à contact angulaire sont configurés pour fournir un support axial du rotor (12) pendant un fonctionnement pour résister à des charges induites par précession.

3. Le dispositif de stockage d'énergie à volant d'inertie de la revendication 1, comprenant en outre deux accéléromètres (78) ou plus montés autour d'une périphérie du boîtier de palier (46) et configuré pour mesurer un déséquilibre dans le rotor (12).

4. Le dispositif de stockage d'énergie à volant d'inertie de la revendication 1, comprenant en outre une jauge de déplacement (80) montée au niveau d'une base du boîtier de palier (46) et configurée pour mesurer un mouvement axial dynamique du rotor (12).

5. Le dispositif de stockage d'énergie à volant d'inertie de la revendication 1, comprenant en outre une pluralité de capteurs d'émission acoustique (82) situés au niveau du boîtier de palier (46) et au sein du boîtier scellé (14, 16, 18) pour mesurer des sons au sein du dispositif de volant d'inertie.

6. Le dispositif de stockage d'énergie à volant d'inertie de la revendication 1, comprenant en outre un dispositif chauffant (110) configuré pour imposer un gradient de température radial sur le rotor (12) de sorte qu'un centre du rotor (12) est à une température plus élevée qu'une périphérie du rotor (12).

7. Le dispositif de stockage d'énergie à volant d'inertie de la revendication 1, comprenant en outre un composant d'isolation sismique (34, 36, 74) configuré pour fournir une isolation sismique au dispositif de volant d'inertie.

8. Le dispositif de stockage d'énergie à volant d'inertie de la revendication 7, dans lequel le composant d'isolation sismique (34, 36, 74) comprend au moins un de pieds réglables (34) fixés en externe au boîtier scellé (14, 16, 18) et à un bloc flexible (36) ou à une feuille de soutien flexible continue (74) positionnée sous une plaque de fond (18) du boîtier scellé (14, 16, 18).

9. Le dispositif de stockage d'énergie à volant d'inertie de la revendication 1, comprenant en outre une pluralité de capteurs de déplacement sans contact (76) situés à l'intérieur d'une chambre de vide au sein de laquelle le rotor (12) est disposé, dans lequel la pluralité de capteurs de déplacement sans contact (76) sont positionnés autour d'une périphérie du rotor (12), dans lequel la pluralité de capteurs de déplacement sans contact (76) sont configurés pour mesurer un changement de rayon du rotor (12) tandis qu'il tourne, et dans lequel la pluralité de capteurs de déplacement sans contact (76) comprend une pluralité de jauges capacitives.

10. Le dispositif de stockage d'énergie à volant d'inertie de la revendication 1, dans lequel l'aimant (28) comprend un aimant permanent.

11. Le dispositif de stockage d'énergie à volant d'inertie de la revendication 10, comprenant en outre :
un actionneur contrôlable à distance configuré pour ajuster une position du rotor (12) au sein du boîtier scellé (14, 16, 18) pour contrôler une lame d'air entre le rotor (12) et l'aimant permanent (28), dans lequel l'actionneur comprend un engrenage à vis sans fin motorisé (68) ; et
un contrôleur configuré pour contrôler l'actionneur en réaction à des mesures issues d'un capteur de charge (44), dans lequel le capteur de charge (44) est configuré pour mesurer des forces magnétiques de levage.

12. Le dispositif de stockage d'énergie à volant d'inertie de la revendication 1, comprenant en outre un moteur à induction (90) connecté à une transmission variable en continue (100).

13. Le dispositif de stockage d'énergie à volant d'inertie de la revendication 1, dans lequel une première extrémité du boîtier vertical cylindrique (16) est positionnée au sein d'un rebord encastré (66) de la plaque de dessus (14), et dans lequel une deuxième extrémité du boîtier vertical cylindrique (16) est positionnée au sein d'un rebord encastré de la plaque de dessous (18).

14. Le dispositif de stockage d'énergie à volant d'inertie de la revendication 1, dans lequel le rotor en forme de disque (12) comprend un rapport épaisseur/diamètre de 15 % ou moins.

15. Le dispositif de stockage d'énergie à volant d'inertie de la revendication 1, dans lequel le rotor en forme de disque (12) comprend une épaisseur de 0,25 m ou moins.
